# EUROPEAN PATENT APPLICATION

(11) **EP 2 015 151 A2**
(43) Date of publication of application: **14.01.2009**
(21) Application number: 08012283.1
(22) Date of filing: 08.07.2008
(51) Int. Cl.: G04G 5/00

(54) **Time adjustment device, timekeeping device with a time adjustment device, and a time adjustment method**

(30) Priority: 09.07.2007 JP 2007179928; 09.07.2007 JP 2007179927
(71) Applicant: Seiko Epson Corporation, Shinjuku-ku Tokyo (JP)
(72) Inventor: Matsuzaki, Jun, Suwa-shi, Nagano 392-8502 (JP)
(74) Representative: HOFFMANN EITLE

(57) **Abstract**

A time adjustment device has a reception unit that receives satellite signals transmitted from a positioning information satellite; a satellite signal processing unit that processes the satellite signal received by the reception unit and acquires at least satellite time information; a timekeeping unit that keeps time internally; and a time information adjustment unit that adjusts the internal time based on the satellite time information; wherein the reception unit and the satellite signal processing unit operate alternatively.

## Description

### BACKGROUND

### 1. Field of Invention

The present invention relates to a time adjustment device that corrects the time based on signals from a positioning information satellite such as a GPS satellite, to a timekeeping device that has the time adjustment device, and to a time adjustment method.

### 2. Description of Related Art

The Global Positioning System (GPS) for determining the position of a GPS receiver uses GPS satellites that circle the Earth on a known orbit, and each GPS satellite has an atomic clock on board. Each GPS satellite therefore keeps the time (referred to below as the GPS time) with extremely high precision.

A GPS receiver that receives signals from GPS satellites must receive the TOW (Time Of Week) signal contained in the signals from a GPS satellite in order to get the time information transmitted by the GPS satellite. See, for example, Japanese Unexamined Patent Appl. Pub. JP-A-10-10251. The TOW signal is the GPS time, and more specifically is information that is updated every week and includes the number of seconds from the beginning of the week.

In order for the GPS receiver to receive this time information, it must first capture a signal from a GPS satellite orbiting the Earth. The GPS receiver must then receive and correlate the captured signals, and then perform certain operations to extract the time data.

More specifically, the GPS signal must be received through an antenna, converted to an intermediate frequency in the RF band, and then correlated by a baseband unit to extract the GPS signal. An operator then processes the extracted GPS signal to extract the time information.

In order to actually acquire the time information after receiving signals from the GPS satellite, the antenna unit, RF unit, baseband unit, and operating unit must be driven simultaneously. The peak power consumption of the GPS receiver therefore increases to, for example, several ten mA.

A large battery must be used to meet this peak power demand. However, a clock, wristwatch, or similar timekeeping device is typically small, and increasing the size of the battery is not practical. The timepiece or other device thus may therefore run out of power and shut down.

### SUMMARY

A time adjustment device, a timekeeping device with a time adjustment device, and a time adjustment method according to the present invention enable acquiring time information from a GPS satellite or other positioning information satellite while suppressing the peak power consumption level.

A time adjustment device according to a preferred aspect of the invention has a reception unit that receives satellite signals transmitted from a positioning information satellite; a satellite signal processing unit that processes the satellite signal received by the reception unit and acquires at least satellite time information; a timekeeping unit that keeps time internally; and a time information adjustment unit that adjusts the internal time based on the satellite time information; wherein the reception unit and the satellite signal processing unit operate alternatively.

By operating the reception unit and satellite signal processing unit alternatively, this aspect of the invention suppresses a rise in the peak power consumption of the timekeeping device.

The satellite signal processing unit in this aspect of the invention acquires the satellite time information by operating on the satellite signal that was received when the reception unit operated. The time kept internally by the time adjustment device can therefore be adjusted based on this satellite time information.

This aspect of the invention can thus acquire time information from a positioning information satellite such as a GPS satellite while also suppressing the peak power demand.

Preferably, the reception unit has a frequency processing unit that frequency converts the received satellite signal, and a demodulation unit that demodulates the satellite signal after frequency conversion by the frequency processing unit. The frequency processing unit, the demodulation unit, and the satellite signal processing unit operate alternatively.

This aspect of the invention suppresses a rise in the peak power consumption of the timekeeping device by alternatively operating the frequency processing unit, the demodulation unit, and the satellite signal processing unit.

The satellite time information can be acquired by the satellite signal processing unit operating on the satellite signal after frequency conversion by the frequency processing unit and demodulation of the frequency-converted signal by the demodulation unit.

When the frequency conversion unit, such as an RF unit, that receives a satellite signal and converts the frequency is operating in this aspect of the invention, the demodulation unit (such as the baseband unit) and satellite signal processing unit do not operate. When the demodulation unit then operates, the frequency conversion unit and satellite signal processing unit do not operate. When the satellite signal processing unit then operates, the frequency conversion unit and demodulation unit do not operate.

This aspect of the invention can thus acquire time information from a positioning information satellite such as a GPS satellite while also suppressing the peak power demand.

Further preferably, the time adjustment device also has a satellite signal storage unit that stores the satellite signal received by the reception unit.

Because the time adjustment device in this aspect of the invention has a satellite signal storage unit that stores the satellite signal received by the reception unit, the satellite signal processing unit can acquire the satellite signal that was received by the reception unit from the satellite signal storage unit, which is operating, instead of from the reception unit, which is not operating.

Further preferably, the time adjustment device also has a counter unit that acquires reception unit operating time information, which is operation-related time for the reception unit, and/or satellite signal processing time information, which is operation-related time for the satellite signal processing unit. The time information adjustment unit adjusts the internally kept time based on adjustment timing information, which is calculated from the reception unit operating time information and/or satellite signal processing time information.

In this aspect of the invention the time information adjustment unit adjusts the internally kept time based on adjustment timing information that is calculated from the reception unit operating time information and/or satellite signal processing time information.

In order to acquire the correction timing, the time adjustment device must normally actually receive the satellite signal and operate according to the received satellite signal.

Because the reception unit is not receiving the satellite signal while the satellite signal processing unit is operating, however, the present invention cannot get the correction timing information directly from the received signal.

The counter unit in this aspect of the invention therefore measures the time that the satellite signal processing unit is operating and determines the correction timing based on this measured operating time. As a result, the correction timing can be calculated with the same precision as when the reception unit continues receiving the satellite signal.

Further preferably, the satellite signal contains propagation delay time information, which is the time required for the satellite signal of the positioning information satellite to arrive.

This aspect of the invention uses a satellite signal that contains propagation delay time information indicating the time required for the satellite signal of the positioning information satellite to arrive.

As a result, the correction timing can be determined very precisely with reference to this propagation delay time.

In another aspect of the invention the reception unit operating time information contains satellite signal reception time information, which is the time that the reception unit receives the satellite signal of the positioning information satellite; and the satellite signal reception time information is the shortest time required to acquire the satellite time information and adjustment timing information.

In this aspect of the invention the satellite signal reception time information is the shortest time required to acquire the satellite time information and adjustment timing information. The satellite time information and the adjustment timing information can therefore be efficiently processed with the reception unit operating for an extremely short time.

In another aspect of the invention the counter unit operates based on a high precision oscillator.

Because the counter unit operates based on a high precision oscillator in this aspect of the invention, the correction timing can be acquired very precisely.

Yet further preferably, the satellite signal contains subframe number information, and the time adjustment device also has a subframe number acquisition unit that acquires target subframe number information including the week number value of the GPS time and/or UTC (universal time, coordinated) parameter information from the subframe number information. The target subframe of the satellite signal is acquired based on the target subframe number information.

In this aspect of the invention the time adjustment device has a subframe number acquisition unit that acquires target subframe number information including the week number value of the GPS time and/or UTC parameter information from the subframe number information, and based on the target subframe number information receives the target subframe of the satellite signal.

As a result, if the week number value of the GPS time cannot be acquired from a single received satellite signal, the subframe that stores the week number or other desired value of the GPS time can be reliably received based on the target subframe number, and the week number of the GPS time, for example, can therefore be acquired.

In another aspect of the invention the satellite signal contains satellite number information, Doppler frequency information, and C/A code phase information for the positioning information satellite; and the time adjustment device further comprises a captured satellite information storage unit that stores the received satellite number information, Doppler frequency information, and C/A code phase information for the positioning information satellite.

Because the time adjustment device has a captured satellite information storage unit that stores the received satellite number information, Doppler frequency information, and C/A code phase information for the captured positioning information satellite, other positioning information satellites can be easily captured using the satellite number information.

Further preferably, the satellite signal reception time is from the length of the C/A code to the length of one message bit.

In this aspect of the invention the satellite signal reception time is from the length of the C/A code to the length of one message bit.

Information about the positioning information satellites that can be captured at the present time can thus be provided after receiving the satellite signal for an extremely short time (from 1 msec (the length of the C/A code) to 20 msec (the length of one message bit)).

In another aspect of the invention the satellite signal is received a plurality of times from the same positioning information satellite; and the time adjustment device also has a match detection unit that determines if there is a match between the plural satellite time values acquired from the plural received signals.

In this aspect of the invention the time adjustment device receives the satellite signal from the same positioning information satellite a plurality of times, and has a match detection unit that determines if there is a match between the plural satellite time values acquired from the plural received signals. Even more precise time information can thus be acquired.

In another aspect of the invention the satellite signals are acquired from a plurality of positioning information satellites; and the time adjustment device also has a different-satellite match detection unit that determines if there is a match between the plural time values acquired from the plural positioning information satellites.

The time adjustment device in this aspect of the invention receives satellite signals from a plurality of positioning information satellites, and has a different-satellite match detection unit that determines if there is a match between the plural time values acquired from the plural positioning information satellites. Even more precise time information can thus be acquired.

Another aspect of the invention is a timepiece with a time adjustment device having a reception unit that receives satellite signals transmitted from a positioning information satellite; a satellite signal processing unit that processes the satellite signal received by the reception unit and acquires at least satellite time information; a timekeeping unit that keeps time internally; and a time information adjustment unit that adjusts the internal time based on the satellite time information; wherein the reception unit and the satellite signal processing unit operate alternatively.

Another aspect of the invention is a time adjustment method including a reception unit that receives satellite signals transmitted from a positioning information satellite; a satellite signal processing unit that processes the satellite signal received by the reception unit and acquires at least satellite time information; a timekeeping unit that keeps time internally; and a time information adjustment unit that adjusts the internal time based on the satellite time information; wherein the reception unit and the satellite signal processing unit operate alternatively; and the satellite signal processing unit operates on the satellite signal after the satellite signal is received by the reception unit.

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a schematic diagram of a wristwatch with a GPS time adjustment device.

FIG. 2 is a block diagram of the main internal hardware arrangement of the wristwatch with GPS receiver.

FIG. 3 is a block diagram showing the main software configuration of the wristwatch with GPS receiver.

FIG. 4 is a block diagram showing the data stored in the program storage unit.

FIG. 5 is a block diagram showing the data stored in the data storage unit.

FIG. 6 is a flow chart of the operation of the wristwatch with GPS receiver.

FIG. 7 is a flow chart of the operation of the wristwatch with GPS receiver.

FIG. 8 schematically describes the structure of a GPS signal.

FIG. 9 schematically describes the GPS signal and reception signal.

FIG. 10 is a block diagram of the main internal hardware arrangement of the wristwatch with GPS receiver according to a second embodiment of the invention.

FIG. 11 is a block diagram showing the data stored in the program storage unit according to a second embodiment of the invention.

FIG. 12 is a block diagram showing the data stored in the data storage unit according to a second embodiment of the invention.

FIG. 13 is a flow chart of the operation of the wristwatch with GPS receiver according to a second embodiment of the invention.

FIG. 14 is a flow chart of the operation of the wristwatch with GPS receiver according to a second embodiment of the invention.

FIG. 15 schematically describes the GPS signal and reception signal.

FIG. 16 is a block diagram showing the data stored in the program storage unit according to a third embodiment of the invention.

FIG. 17 is a block diagram showing the data stored in the data storage unit according to a third embodiment of the invention.

FIG. 18 is a flow chart of the operation of the wristwatch with GPS receiver according to a third embodiment of the invention.

FIG. 19 is a flow chart of the operation of the wristwatch with GPS receiver according to a third embodiment of the invention.

FIG. 20 is a block diagram showing the data stored in the program storage unit according to a fourth embodiment of the invention.

FIG. 21 is a block diagram showing the data stored in the data storage unit according to a fourth embodiment of the invention.

FIG. 22 is a flow chart of the operation of the wristwatch with GPS receiver according to a fourth embodiment of the invention.

FIG. 23 is a flow chart of the operation of the wristwatch with GPS receiver according to a fifth embodiment of the invention.

FIG. 24 is a flow chart of the operation of the wristwatch with GPS receiver according to a sixth embodiment of the invention.

FIG. 25 is a flow chart of the operation of the wristwatch with GPS receiver according to a seventh embodiment of the invention.

### DESCRIPTION OF PREFERRED EMBODIMENTS

Preferred embodiments of the present invention are described below with reference to the accompanying figures. Note that the following embodiments are preferred specific implementations of the invention and therefore describe some technically preferred limitations, but the scope of the invention is not limited thereto unless specifically stated as required by the invention.

Embodiment 1

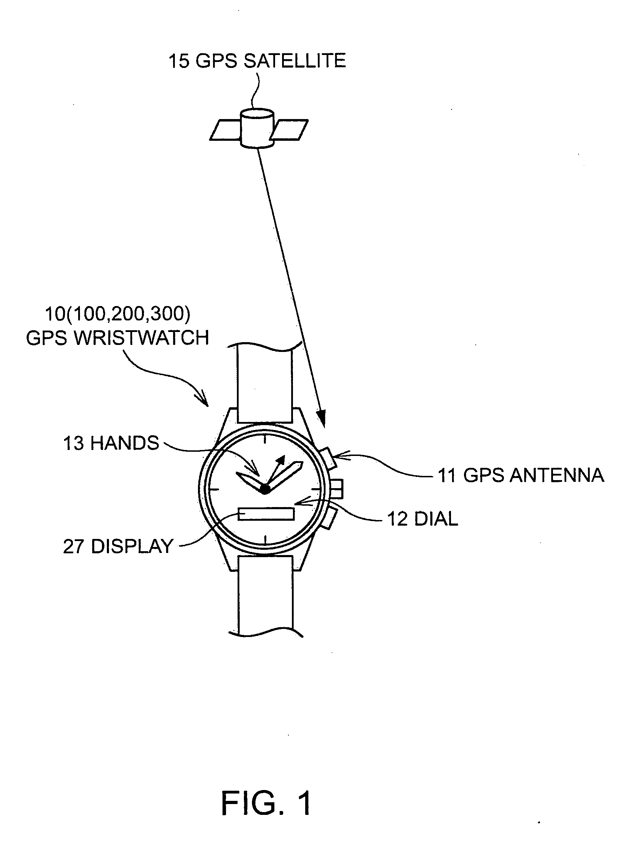

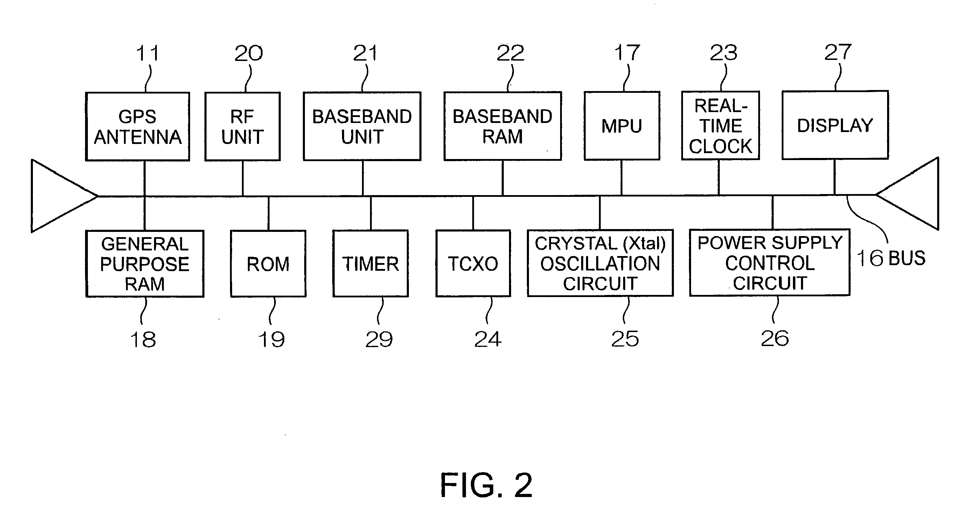

FIG. 1 shows a wristwatch with GPS receiver 10 (referred to herein as a GPS wristwatch 10) as an example of a timekeeping device with a satellite signal reception device according to the present invention. FIG. 2 is a block diagram of the main internal hardware arrangement of the GPS wristwatch 10 shown in FIG. 1.

As shown in FIG. 1, the GPS wristwatch 10 has a dial 12 with hands 13 including a long hand and a short hand for indicating the time on the face, and a display 27 such as an LED display for presenting information and messages. The display 27 is not limited to an LED device and could be an LCD or an analog display.

As also shown in FIG. 1 the GPS wristwatch 10 also has an antenna 11. This antenna 11 is used for receiving signals from a GPS satellite 15 circling the Earth on a fixed orbit in space. The GPS satellite 15 is an example of a positioning information satellite that orbits the Earth.

As shown in FIG. 2, the GPS wristwatch 10 has an internal timekeeping mechanism and GPS receiver assembly, and components for functioning as a computer.

More particularly, the timekeeping assembly of the GPS wristwatch 10 according to this embodiment of the invention is an electronic timepiece.

The components of the GPS wristwatch 10 shown in FIG. 2 are described below.

As shown in FIG. 2 the GPS wristwatch 10 has a bus 16. Connected to this bus 16 are an MPU (micro processing unit) 17, RAM (random access memory) 18, and ROM (read-only memory) 19.

A GPS receiver assembly for receiving satellite signals is also connected to the bus 16.

More specifically, the antenna 11, an RF unit 20 that converts the received signals to an intermediate frequency, a baseband unit 21 that demodulates the signals acquired from the RF unit 20, and baseband RAM 22 that stores the signals demodulated by the baseband unit 21 are connected to the bus 16.

The signals received from the GPS satellite 15 in FIG. 1 are output from the antenna 11 through the RF unit 20 to the baseband unit 21. The signals are then output from the baseband unit 21 as GPS signals, which are stored in the baseband RAM 22.

The RF unit 20 and baseband unit 21 are thus an example of a reception unit for receiving satellite signals. The baseband RAM 22 is an example of a satellite signal storage unit.

The GPS signals stored in baseband RAM 22 are processed by the MPU 17 to extract the GPS satellite navigation message described below and retrieve the GPS time information (Z count), for example. The signals received from the GPS satellites are described in detail below.

The MPU 17 is an example of a satellite signal processing unit that acquires satellite time information such as the Z count.

A timekeeping mechanism is also connected to the bus 16. This timekeeping mechanism includes a real-time clock 23 (RTC) such as an integrated circuit device (semiconductor integrated circuit) and crystal (Xtal) oscillation circuit 25. A high precision oscillator such as a temperature-control crystal oscillation circuit (TCXO) 24 is also connected to the bus 16 in addition to the crystal (Xtal) oscillation circuit 25.

This embodiment of the invention thus has two oscillation circuits. This is to enable using the high power consumption, high precision TCXO 24 and the low power consumption, low precision common crystal oscillation circuit 25 selectively according to the application.

A power supply control circuit 26 for controlling a power supply unit such as a battery, the display 27 shown in FIG. 1, and a timer 29 as an example of a counter unit are also connected to the bus 16.

The timer 29 counts the time based on the TCXO 24, and can thus keep time with high precision.

The bus 16 thus is an internal bus with addresses and data paths that function to connect all other devices. Various operating programs and information are stored in ROM 19, which is also connected to the bus 16. The MPU 17 uses general purpose RAM 18 to execute the programs and access ROM 19.

The real-time clock 23 is an example of a timekeeping unit that keeps the time, and the RF unit 20 is an example of a reception unit that receives satellite signals transmitted from the positioning information satellite (GPS satellite 15).

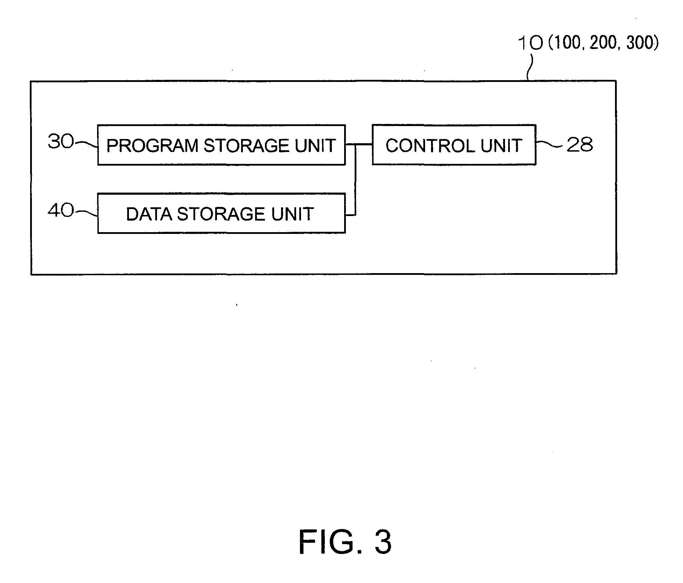

FIG. 3 is a block diagram showing the general software configuration of the GPS wristwatch 10.

As shown in FIG. 3 the GPS wristwatch 10 has a control unit 28. The control unit 28 runs the programs stored in the program storage unit 30, and processes the data stored in the data storage unit 40.

The program storage unit 30 and data storage unit 40 are shown as discrete units in FIG. 3, but the data and programs are not actually stored separately and are simply shown this way for convenience.

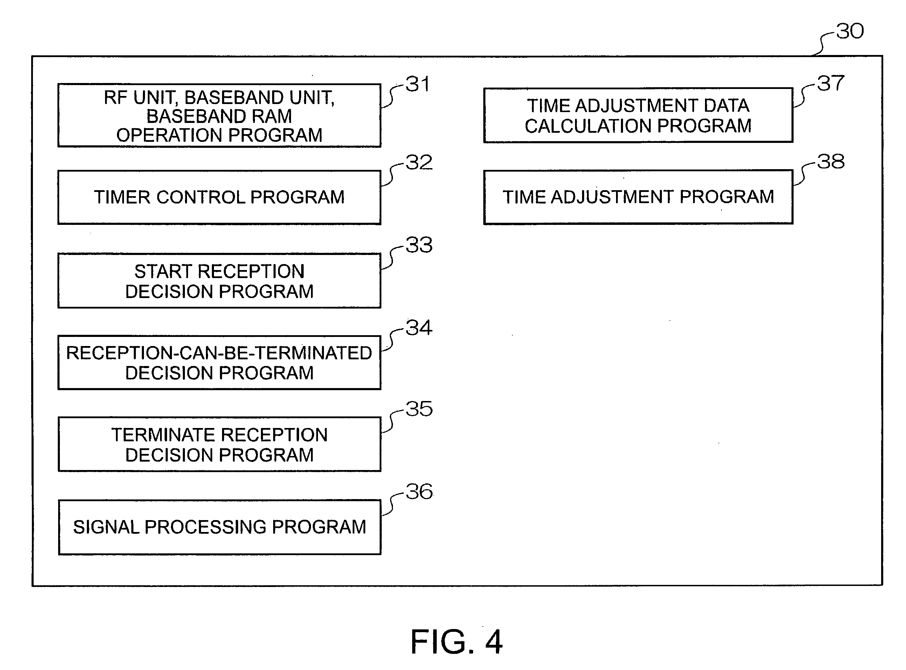

FIG. 4 is a block diagram showing the data stored in the program storage unit 30 in FIG. 3. FIG. 4 is a block diagram showing data stored in the data storage unit 40 in FIG. 3.

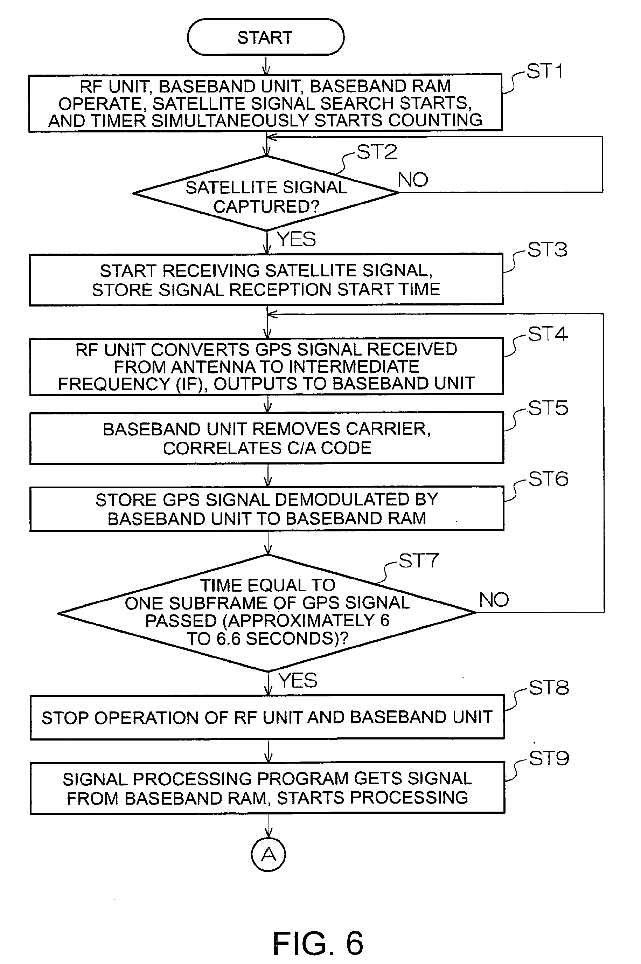

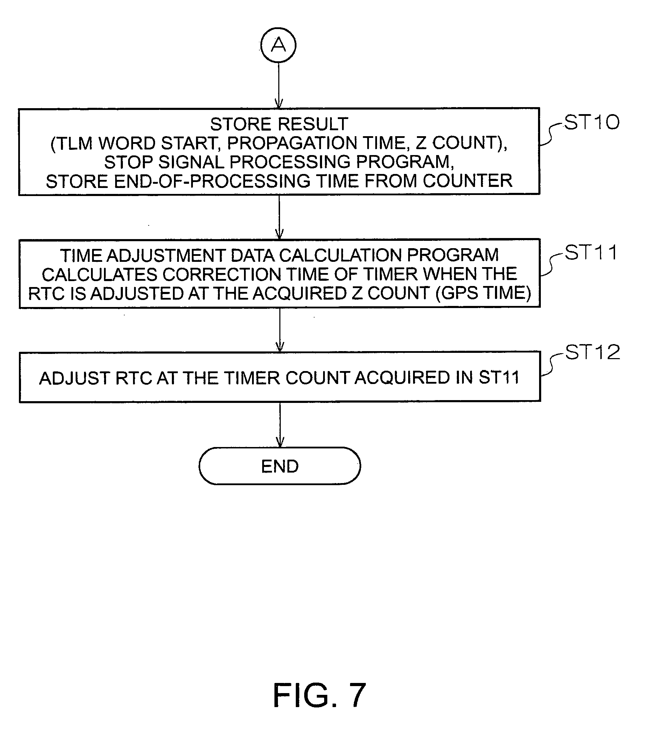

FIG. 6 and FIG. 7 are flow charts describing the main steps in the operation of the GPS wristwatch 10 according to this embodiment of the invention.

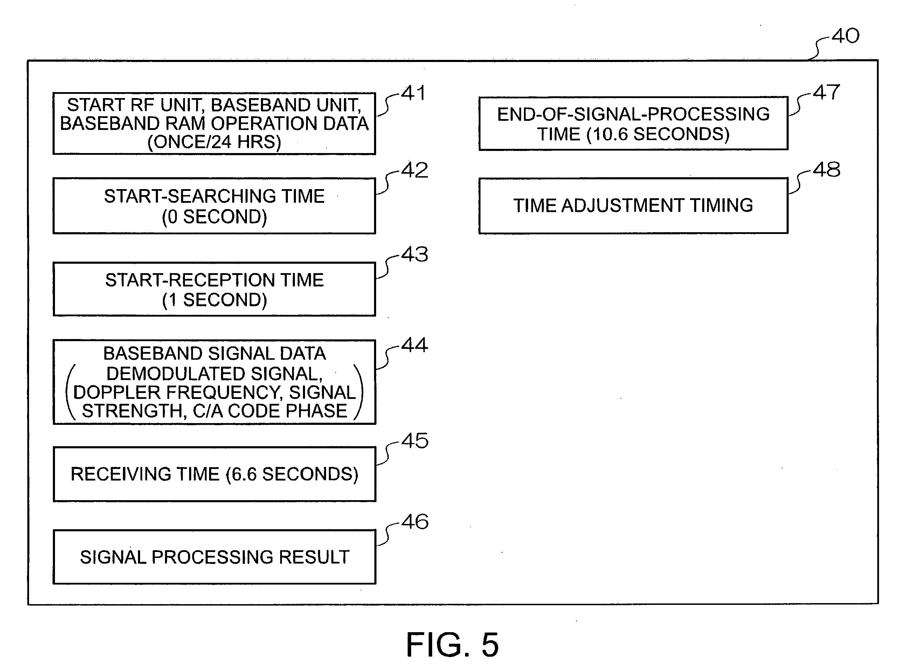

The operation of the GPS wristwatch 10 according to this embodiment of the invention is described next with reference to the flow charts in FIG. 6 and FIG. 7. The programs and data shown in FIG. 4 and FIG. 5 are also described below in conjunction with the operation of the GPS wristwatch 10.

The GPS wristwatch 10 according to this embodiment of the invention automatically corrects the time once a day, that is, once every 24 hours.

When the GPS wristwatch 10 corrects the time of the real-time clock 23 shown in FIG. 2, the RF unit 20, baseband unit 21, and baseband RAM 22 shown in FIG. 2 operate in step ST1 in FIG. 6 to search for a satellite signal from a GPS satellite 15. The MPU 17 in FIG. 2 does not process the GPS signal at this time.

The MPU 17 conventionally operates at the same time as the RF unit 20, the baseband unit 21, and the baseband RAM 22. This is to continuously process the GPS signal received by the RF unit 20 through the GPS antenna 11 and acquire the Z count from the GPS signal.

In this embodiment of the invention, however, the MPU 17 does not process the signals while the RF unit 20 is searching for and acquiring a satellite signal from the GPS satellite 15. As a result, this embodiment of the invention can avoid increasing the peak power consumption resulting from the RF unit 20 and MPU 17 operating simultaneously.

The operation of step ST1 is achieved by running the RF unit, baseband unit, baseband RAM operation program 31 shown in FIG. 4. More specifically, the RF unit, baseband unit, baseband RAM operation program 31 references the start RF unit, baseband unit, baseband RAM operation data (once/24 hrs) 41 in FIG. 5, and searches for a GPS satellite signal if it is time to automatically adjust the time.

While searching for a satellite signal, the timer 29 starts operating using the TCXO 24 to measure the elapsed time with high precision. More specifically, the timer control program 32 in FIG. 4 operates to store the time at which the satellite signal search started as the start-searching time 42 in FIG. 5 while the timer 29 continues counting the time. In this example the start-searching time 42 is the 0 second.

Control then goes to step ST2. Step ST2 decides if a satellite signal from a GPS satellite 15 was captured. If a satellite signal was captured, control goes to step ST3. If a satellite signal was not captured, signal searching continues until a signal is captured.

Satellite signal reception by the RF unit 20 starts in step ST3, and the time when GPS signal reception starts is stored.

More specifically, the start reception decision program 33 in FIG. 4 operates to determine if the RF unit 20 has started receiving the satellite signal. If it is determined that reception started, the time count of the timer 29 corresponding to the time at which reception started is stored as the start-reception time 43 in FIG. 5.

The start-reception time 43 is thus the difference to the start-searching time 42, which is the 0 second in this example, and if searching took one second the start-reception time 43 is therefore 1 second.

The GPS wristwatch 10 then receives the satellite signal (GPS signal) from the GPS satellite 15 in steps ST4 to ST7.

In step ST4 the GPS antenna 11 in FIG. 2 receives the satellite signal from the GPS satellite 15. The received GPS signal is then input to the RF unit 20. The RF unit 20 converts the input GPS signal to an intermediate frequency (IF), converts the analog signal to a digital signal, and inputs the digital signal to the baseband unit 21.

Control then goes to step ST5. In step ST5 the baseband unit 21 removes the carrier of the input digital signal and executes steps for C/A code correlation and phase synchronization. The baseband unit 21 thus demodulates the GPS signal from the GPS satellite 15.

The GPS signal demodulated by the baseband unit 21 is then in step ST6 stored to the baseband RAM 22. More specifically, the demodulated GPS signal is stored to the baseband RAM 22 as the baseband signal data 44 in FIG. 5.

By thus storing the received and demodulated GPS signal in baseband RAM 22, stopping operation of the RF unit 20 and baseband unit 21 will not interfere with the following signal processing operation.

Whether reception of the GPS signal from a GPS satellite 15 has continued for a prescribed time, such as the time equivalent of one subframe (approximately 6 seconds to 6+margin (such as 6.6) seconds), is then determined in step ST7.

Because the object in this embodiment of the invention is to acquire the GPS time information (Z count) from the GPS signal of the GPS satellite 15, the structure of the GPS signal transmitted from the GPS satellite 15 is described next.

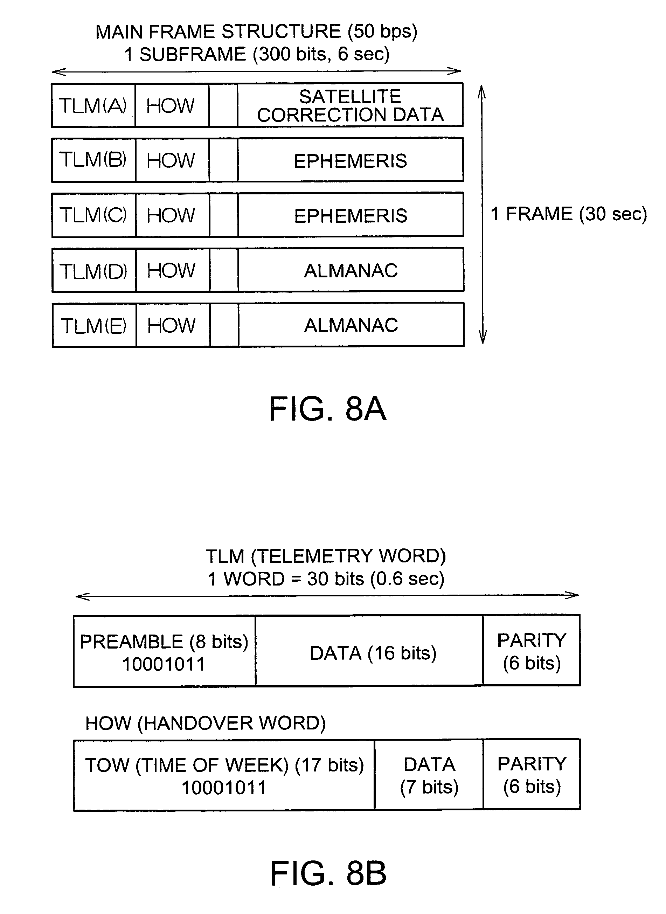

FIG. 8 schematically describes a GPS signal.

As shown in FIG. 8A, the GPS satellite 15 transmits signals in data frame units and transmits one frame every 30 seconds. Each frame consists of five subframes, and one subframe is transmitted every 6 seconds. Each subframe contains 10 words (1 word is transmitted every 0.6 second).

The first word in each subframe is a telemetry (TLM) word storing the TLM data, and each TLM word starts with a preamble as shown in FIG. 8B.

The TLM word is followed by a handover word HOW storing the HOW (handover) data, and each HOW starts with the time of week (TOW) indicating the GPS time information (Z count) of the GPS satellite 15.

The Z count stores the time of the beginning of the TLM in the next subframe.

The GPS time is the number of seconds since 00:00:00 Sunday night of each week, and is reset to zero at precisely 00:00:00 every Sunday night.

The Z count, or GPS time information, can therefore be acquired by reading the HOW, which is the second word in the subframe. However, when the GPS wristwatch 10 receives the GPS signal sent from a GPS satellite 15, the GPS wristwatch 10 cannot control where in the subframe reception starts. Recognizing that reception might start just after the TOW (Z count) shown in FIG. 8B, the reception time in this embodiment of the invention is referenced to the length of one subframe, that is, 6 seconds. In addition, because GPS signal reception could start from the middle of the TOW (Z count) in FIG. 8B, the reception time is further preferably the length of one subframe plus a margin <, or 6.6 seconds in this embodiment of the invention.

By thus receiving the GPS signal for a reception time long enough to receive one subframe, the GPS wristwatch 10 can reliably acquire the TOW (Z count) data shown in FIG. 8.

The received Z count is then stored in the baseband RAM 22 in step ST6.

Whether the reception time approximately equal to one subframe has passed is determined in step ST7 by the reception-can-be-terminated decision program 34 in FIG. 4 referencing the receiving time 45 (such as 6 seconds or 6.6 seconds) in FIG. 5.

This reception time of 6 seconds or 6.6 seconds is an example of a reception time approximately equal to one subframe.

This reception time of 6.6 seconds is counted by the timer 29 in FIG. 2. More specifically, the timer 29 gets the reception start time in step ST3 in FIG. 6 and stores the time value, which is 10 seconds in this example.

The timer 29 then continues counting the time, and when the time count of the timer 29 reaches 16.6 seconds in this example, reception stops. The terminate reception decision program 35 in FIG. 4 makes this decision.

If the terminate reception decision program 35 determines that reception has ended, the RF unit, baseband unit, baseband RAM operation program 31 operates to stop operation of the RF unit and baseband unit in step ST8.

If the terminate reception decision program 35 decides that reception has not ended, the procedure loops to step ST4 and GPS signal reception continues.

Control then goes to step ST9. The process of extracting the Z count from the GPS signal received by the RF unit 20 is purposely not executed in steps ST1 to ST8, and is instead executed by the MPU 17 starting from step ST9.

This embodiment of the invention thus supplies power through the power supply control circuit 26 in FIG. 2 to the RF unit 20 and baseband unit 21 while the RF unit 20 is receiving the GPS signal of the GPS satellite 15. Power enabling the MPU 17 to process the GPS signal is not supplied to the MPU 17 while the signal is being received, however.

When the MPU 17 starts processing the GPS signal in step ST9, however, power is supplied to the MPU 17. GPS signal reception by the RF unit 20 is stopped during this time, however, and power consumption by the RF unit 20 and other components is therefore stopped or significantly reduced.

Because the GPS signal reception operation of the RF unit 20 and signal processing by the MPU 17 do not occur simultaneously, an increase in the peak power consumption of the GPS wristwatch 10 can be suppressed.

The process whereby the baseband signal data 44 in FIG. 5 is processed to acquire the Z count and the time kept by the GPS wristwatch 10 is corrected based on the Z count is described next with reference to step ST8 to ST12.

When operation of the RF unit and baseband unit stops in step ST8, processing the baseband signal data 44 stored in the baseband RAM 22 in FIG. 2 by the MPU 17 starts (step ST9). More specifically, the signal processing program 36 in FIG. 4 executes.

Control then goes to step ST10. When processing by the signal processing program 36 ends, the result is stored to the signal processing result 46 in FIG. 5 in step ST10. The time count of the timer 29 when signal processing ends is also stored as the end-of-signal-processing time 47 in FIG. 5.

In this example, if signal processing took 3 seconds, the time count of the timer 29 is 19.6 seconds.

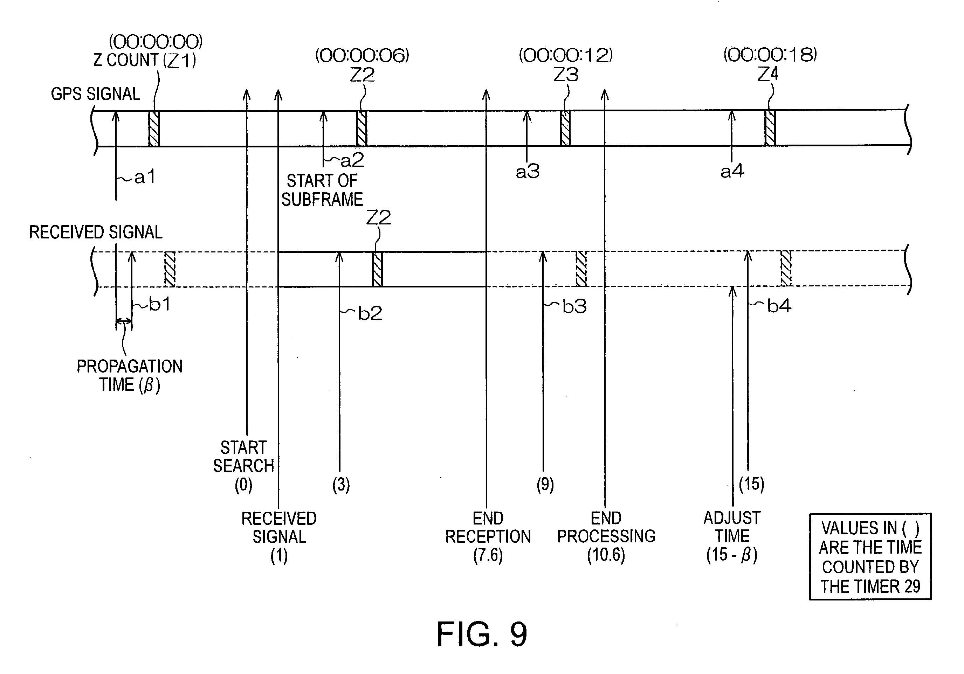

The signal processing result is described next referring to the GPS signal and reception signal timing chart in FIG. 9.

In FIG. 9 the GPS signal sent from the GPS satellite 15 is shown in the top row, and the reception signal that is received and processed by the GPS wristwatch 10 is shown in the bottom row.

As shown in FIG. 9, the reception signal is received delayed by a propagation time β from the transmitted GPS signal. This propagation time β represents the time required for the GPS signal to travel from the GPS satellite 15 to the GPS wristwatch 10. This propagation time β is an example of propagation delay time information.

The GPS wristwatch 10 can acquire this propagation time β by detecting the phase of the C/A code in step ST5 in FIG. 6 and processing the signal in step ST9.

Arrows a1 to a4 in the GPS signal in FIG. 9 denote the start of each subframe in FIG. 8A. These timing points can be acquired by the GPS wristwatch 10 correlating and processing the C/A codes of the GPS signal.

The arrows b1 to b4 in the reception signal shown on the bottom row also denote the beginning of the subframes and correspond to arrows a1 to a4 in the GPS signal. Arrows b1 to b4 indicate the propagation delay β at which the subframes are received as described above.

The Z counts Z1 to Z4 in FIG. 9 are the TOW values shown in FIG. 8B, and these time values show the starting time of the next subframe. For example, Z1 in FIG. 9 is 00:00:00, and this time 00:00:00 is the time of the beginning of the subframe indicated by arrow a2 in FIG. 9.

Because the length of one subframe is 6 seconds, the Z counts in subframes a2 to a4 are sequentially incremented 6 seconds each.

The GPS wristwatch 10 can thus acquire the time of the Z count in these subframes by a simple calculation.

More specifically, by receiving and processing the GPS signal from the GPS satellite 15, the GPS wristwatch 10 acquires the propagation time β, the subframe start time a2 (b2 on the receiver side), and the time (Z count) of the beginning of the next subframe after the received subframe as shown in FIG. 9.

If reception proceeds as shown in FIG. 6 based on this assumption, operation proceeds as follows.

That is, the GPS wristwatch 10 starts searching for a satellite signal from the GPS satellite 15 when searching for a signal starts as indicated in FIG. 9. This corresponds to step ST1 in FIG. 6.

The timer 29 starts counting the time as described above, and the search starts at 0 second in this example. This time value is stored as the start-searching time 42 in FIG. 5.

The GPS satellite 15 signal is then captured in step ST2, and GPS signal reception starts in step ST3. If the search time is 1 second as described above, the reception start time of the timer 29 in FIG. 9 (the start-reception time 43 in FIG. 5) is 1 second.

Because GPS signal reception ends in step ST8 (operation of the RF unit 20 stops) at 6.6 seconds after the start of reception in this example, the timer 29 count when reception ends is 7.6 seconds.

If processing in step ST9 requires 3 seconds, for example, the count of the timer 29 when processing ends (the end-of-signal-processing time 47) is 10.6 seconds.

Furthermore, because the GPS wristwatch 10 can determine the timing of the beginning of the received subframe in FIG. 9 by a simple calculation, the GPS wristwatch 10 can determine how many seconds this is from the reception start time of the timer 29 in FIG. 9 by a simple calculation.

If this time is 2 seconds, for example, the start of the subframe indicated by arrow b2 in the reception signal in FIG. 9 is when the time counted by the timer 29 reaches 3 seconds.

As shown in FIG. 9, the time of the Z count (Z2) acquired from the received signal is the time count of the timer 29 at the point indicated by arrow b3, that is, 9 seconds.

Because this 9-second time count of the timer 29 includes the propagation time β, the time count of the timer 29 equal to this 9 seconds minus propagation time β is equal to the time of the Z count Z2.

The time equal to the time value of this Z count Z2 plus 6 seconds is therefore the time count of the timer 29 at arrow b4 (15 seconds) minus the propagation time β (which is equal to a4 in FIG. 9).

The time adjustment data calculation program 37 in FIG. 4 therefore operates in step ST11 to determine the calculated starting point (a4) of the next subframe in the GPS signal based on the processed GPS signal data and the time count of the timer 29, and store this value as the time adjustment timing 48 in FIG. 5.

At the time count of the timer 29 equal to (15 seconds minus the propagation time β), this time adjustment value 48 is the time of the Z count Z2 (00:00:06) plus 6 seconds or 00:00:12.

The timing of the time adjustment can thus be acquired with good precision by adding the product of 6 seconds times the number of subframes passed by the end of signal processing to the Z count received by the GPS wristwatch 10, and then subtracting the propagation time β.

The time adjustment program 38 in FIG. 4 then operates in step ST12 as shown in FIG. 7 to correct the real-time clock 23 in FIG. 2 based on the time adjustment timing 48 in FIG. 5. The time can thus be corrected with good precision.

When adjusting the time is finished, operation of the timer 29 in FIG. 2 ends, and operation continues thereafter using only the standard crystal oscillation circuit 25.

By thus using the TCXO 24 in FIG. 2 when the precise time is required, and using the standard crystal oscillation circuit 25 otherwise, the operating time of the relatively high power consumption TCXO 24 can be shortened and the overall power consumption of the GPS wristwatch 10 can be suppressed.

By separating receiving and processing the GPS signals from the GPS satellite 15, this embodiment of the invention can also reduce the peak power consumption. The time can also be adjusted with good precision even though time is taken for signal processing after reception ends. This embodiment also improves time precision by using a high precision TCXO 24 for the timer 29. This TCXO 24 is used only when required, and a standard crystal oscillation circuit 25 is used when the TCXO 24 is not required. Power consumption can therefore be minimized.

This embodiment of the invention uses the timer 29 to get the start-searching time 42, start-reception time 43, and end-of-signal-processing time 47. The timer 29 could, however, be used to count only one of the start-searching time 42, start-reception time 43, and end-of-signal-processing time 47 values, and the other values could be calculated.

The invention can also correct the time kept by the real-time clock 23 with good precision irrespective of the time required to complete processing as shown in FIG. 9. An MPU 17 with low processing capacity can therefore be used to execute the operations shown in step ST9 in FIG. 6. Power consumption by the MPU can therefore be reduced, and a GPS wristwatch with even lower power consumption can therefore be achieved.

The time adjustment program 38 in FIG. 4 is an example of a time information adjustment unit. The GPS antenna 11, RF unit 20, and baseband unit 21 in FIG. 2 are an example of a reception unit. The MPU 17 in FIG. 2 and the signal processing program 36 in FIG. 4 are an example of a satellite signal processing unit. The reception unit and the satellite signal processing unit operate alternatively.

The receiving time 45 in FIG. 5 is an example of reception unit timekeeping information and satellite signal reception time information. The 6 seconds or 6.6 seconds used above as an example of the receiving time 45 is an example of the minimum time information needed to acquire satellite time information and correcting timing information.

The end-of-signal-processing time 47 in FIG. 5 is an example of satellite signal processing time information. The timer 29 in FIG. 2 is an example of a counter unit. The time adjustment timing 48 in FIG. 5 is an example of correction timing information.

* Embodiment 2

The configuration of the GPS wristwatch 100 according to this embodiment of the invention is substantially identical to the GPS wristwatch 10 described in the first embodiment, like parts are therefore identified by the same reference numerals, and the differences therebetween are described below.

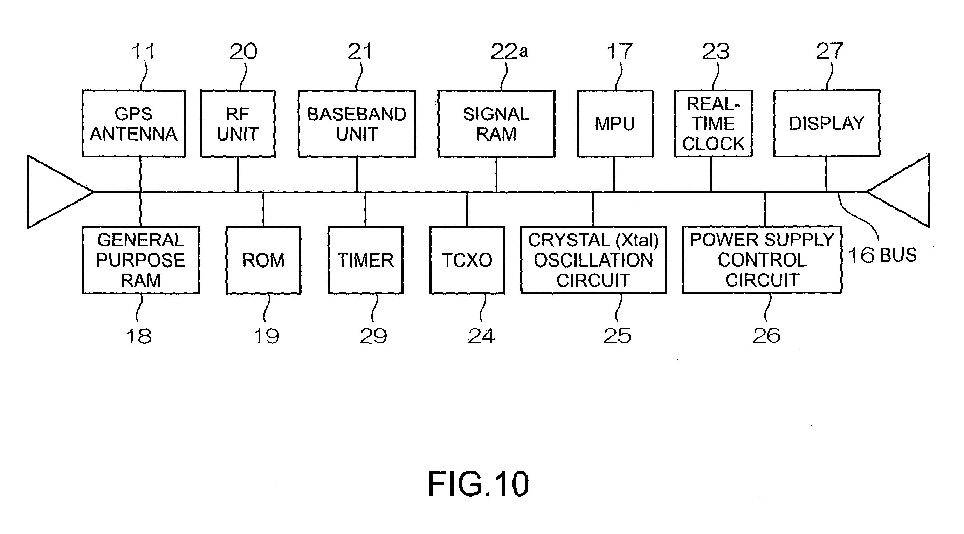

FIG. 10 is a block diagram showing the main hardware internal configuration of the GPS wristwatch 100 according to this second embodiment of the invention. The signal RAM 22a shown in FIG. 10 stores both signals processed by the RF unit 20 and signals demodulated by the baseband unit 21.

Signals received from the GPS satellite 15 in FIG. 1 are passed from the GPS antenna 11 to the RF unit 20, processed thereby and then stored in the signal RAM 22a. The stored signals are then acquired by the baseband unit 21 and demodulated, and the demodulated signals are also stored to signal RAM 22a.

The RF unit 20 is an example of a frequency processing unit. The baseband unit 21 is an example of a demodulation processing unit. The signal RAM 22a is an example of a satellite signal storage unit.

The GPS signal stored in the signal RAM 22a is processed by the MPU 17 to acquire the navigation message of the GPS satellite, and more particularly acquire the GPS time information (Z count).

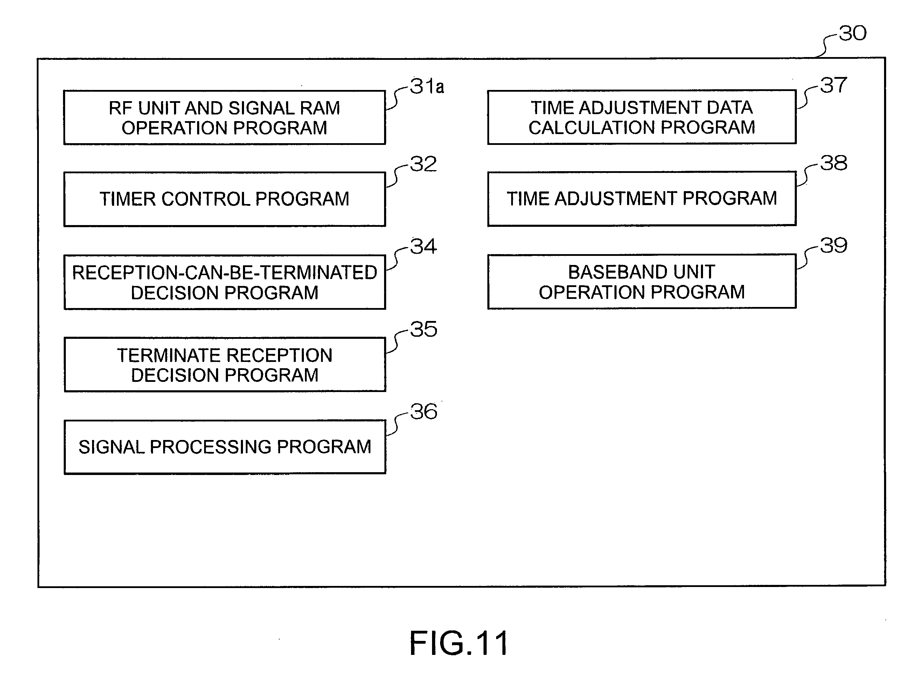

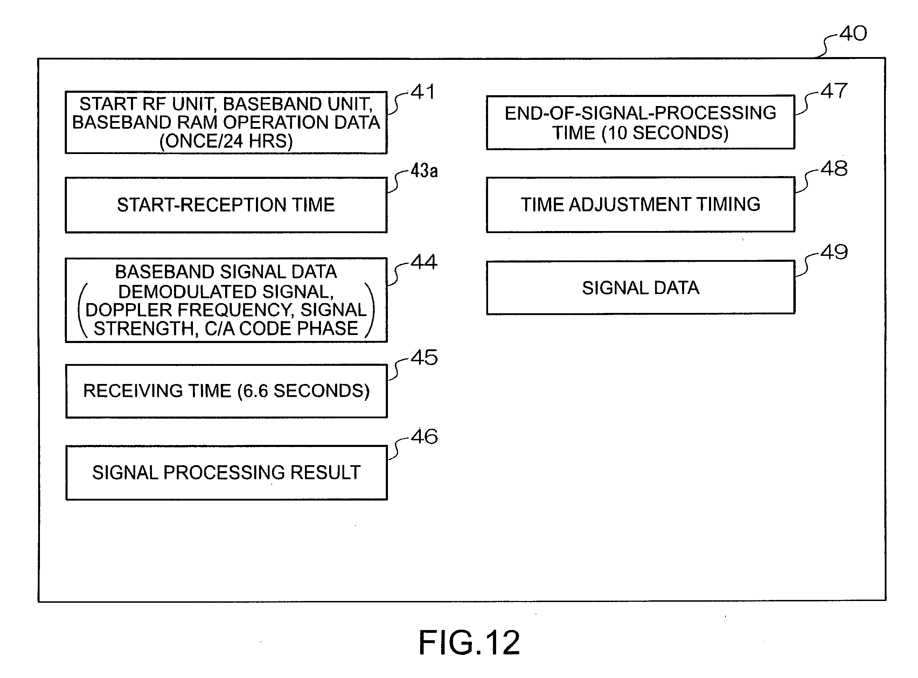

FIG. 11 is a block diagram showing the data stored in the program storage unit 30 in this second embodiment of the invention. FIG. 12 is a block diagram showing the data stored in the data storage unit 40 in this second embodiment of the invention.

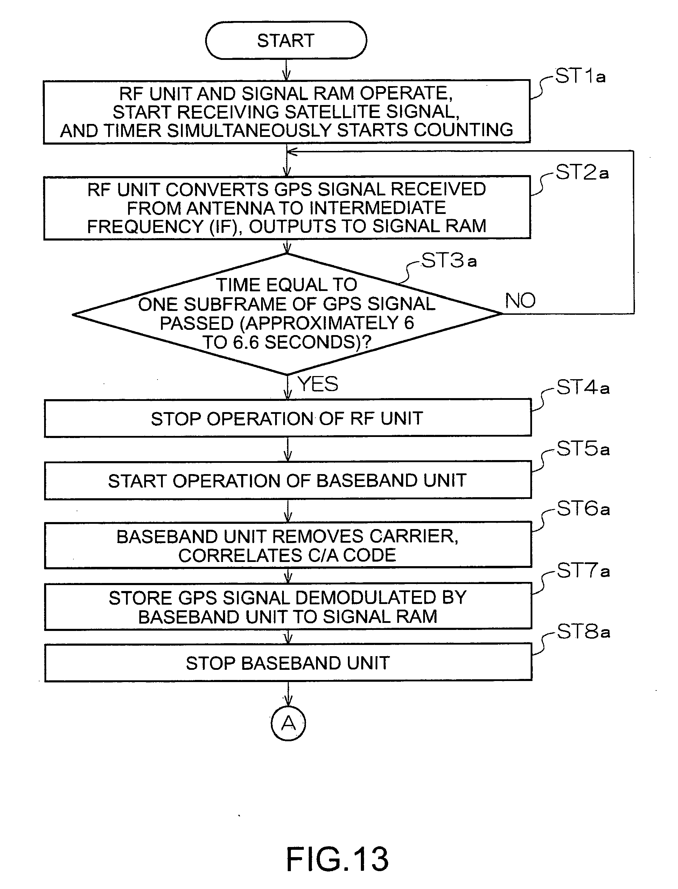

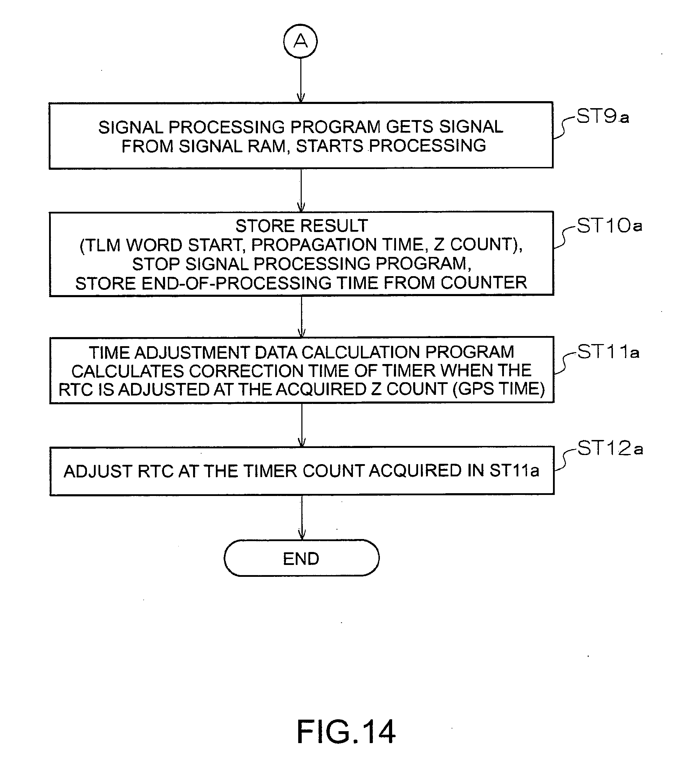

FIG. 13 and FIG. 14 are flow charts describing the main steps in the operation of the GPS wristwatch 100 according to this second embodiment of the invention.

The operation of the GPS wristwatch 100 according to this embodiment of the invention is described next with reference to the flow charts in FIG. 13 and FIG. 14. The programs and data shown in FIG. 11 and FIG. 12 are also described below in conjunction with the operation of the GPS wristwatch 100.

The GPS wristwatch 100 according to this embodiment of the invention automatically corrects the time once a day, that is, once every 24 hours.

When the GPS wristwatch 100 corrects the time of the real-time clock 23 shown in FIG. 10, the RF unit 20 and signal RAM 22a shown in FIG. 10 first operate in step ST1a in FIG. 13 to start receiving the GPS signal of a GPS satellite 15. The baseband unit 21 in FIG. 10 does not operate and the MPU 17 does not process the GPS signal at this time.

The MPU 17 conventionally operates at the same time as the RF unit 20, the baseband unit 21, and the signal RAM 22a. This is to continuously process the GPS signal received by the RF unit 20 through the GPS antenna 11 and acquire the Z count from the GPS signal.

In this embodiment of the invention, however, the baseband unit 21 and MPU 17 do not process the signals while the RF unit 20 is receiving the GPS signal of the GPS satellite 15. While the baseband unit 21 is operating, the RF unit 20 and the MPU 17 do not operate. In addition, the RF unit 20 and the baseband unit 21 do not operate while the MPU 17 is operating. The RF unit 20, the baseband unit 21, and the MPU 17 thus operate alternatively. As a result, this embodiment of the invention can avoid increasing the peak power consumption caused by these devices operating simultaneously.

The operation of step ST1a is achieved by running the RF unit and signal RAM operation program 31a shown in FIG. 11. More specifically, the RF unit and signal RAM operation program 31a references the start RF unit and signal RAM operation data (once/24 hrs) 41 in FIG. 12, and receives the GPS signal of a GPS satellite if it is time to automatically adjust the time.

While receiving the GPS signal, the timer 29 starts operating using the TCXO 24 to measure the elapsed time with high precision. More specifically, the timer control program 32 in FIG. 11 operates to store the time at which the GPS signal reception started as the start-reception time 43a in FIG. 12 while the timer 29 continues counting the time. In this example the start-reception time 43a is the 0 second.

The GPS wristwatch 100 in this embodiment of the invention then executes the process to receive the GPS signal of the GPS satellite 15.

In step ST2a the GPS signal from the GPS satellite 15 is received through the GPS antenna 11 in FIG. 10. The received GPS signal is then input to the RF unit 20. The RF unit 20 converts the input GPS signal to an intermediate frequency (IF), converts the analog signal to a digital signal, and inputs the digital signal to the signal RAM 22a. More specifically, the digitized signal is stored as the signal data 49 in FIG. 12.

Control then goes to step ST3a. Step ST3a determines whether receiving the GPS signal from the GPS satellite 15 has continued for a prescribed time, such as the time equivalent of one subframe (approximately 6 seconds to 6+margin (such as 6.6) seconds).

By thus receiving the GPS signal for a reception time long enough to receive one subframe, the GPS wristwatch 100 can reliably acquire the TOW (Z count) data shown in FIG. 8.

The received Z count is then stored in the signal RAM 22a as described below.

Whether the reception time approximately equal to one subframe has passed is determined in step ST3a by the reception-can-be-terminated decision program 34 in FIG. 11 referencing the receiving time 45 (such as 6 seconds or 6.6 seconds) in FIG. 12.

This reception time of 6 seconds or 6.6 seconds is an example of a reception time approximately equal to one subframe.

This reception time of 6.6 seconds is counted by the timer 29 in FIG. 10. More specifically, reception stops when the time counted by the timer 29 reaches 6.6 seconds. The terminate reception decision program 35 in FIG. 4 makes this decision.

If the terminate reception decision program 35 determines that reception ends, the RF unit and signal RAM operation program 31a in FIG. 11 operates to stop operation of the RF unit 20 in step ST4a.

If the terminate reception decision program 35 decides that reception has not ended, the procedure returns to step ST2a and reception continues.

Control then goes to step ST5a. In ST5a the baseband unit 21 starts operating. More specifically, the baseband unit operation program 39 in FIG. 11 runs.

As shown in step ST6a, the baseband unit 21 gets the RF signal data 49 in FIG. 12 that is stored in the signal RAM 22a, removes the carrier of the input digital signal and executes steps for C/A code correlation and phase synchronization. The baseband unit 21 thus demodulates the GPS signal from the GPS satellite 15.

Because the baseband unit 21 uses the RF signal data 49 stored in the signal RAM 22a, stopping operation of the RF unit 20 in step ST4a will not interfere with processing by the baseband unit 21.

In step ST7a the GPS signal demodulated by the baseband unit 21 is stored in the signal RAM 22a. More specifically, the demodulated GPS signal is stored as the baseband signal data 44 in the signal RAM 22a.

Operation of the baseband unit 21 then stops in step ST8a. More specifically, the baseband unit operation program 39 operates to stop operation of the baseband unit.

Because the received and demodulated GPS signal is stored in signal RAM 22a, stopping operation of the baseband unit 21 will not interfere with the following signal processing operation.

Control then goes to step ST9a. The process of extracting the Z count from the GPS signal received by the RF unit 20 is purposely not executed in steps ST1a to ST8a, and is instead executed by the MPU 17 starting from step ST9a.

This embodiment of the invention thus supplies power through the power supply control circuit 26 in FIG. 10 to the RF unit 20 while the RF unit 20 is receiving the GPS signal of the GPS satellite 15, but operating power is not supplied to the baseband unit 21 and the MPU 17 while the signal is being received.

In addition, operating power is not supplied to the RF unit 20 and the MPU 17 while operating power is supplied to the baseband unit 21. Power is supplied to the MPU 17 when the MPU 17 starts processing the GPS signal as shown in step ST9a. During this time, however, power consumption by the RF unit 20 and baseband unit 21 is stopped or significantly reduced.

In other words, the RF unit 20, the baseband unit 21, and the MPU 17 do not operate at the same time, and these devices always operate selectively one at a time.

This configuration can thus suppress an increase in the peak power consumption of the GPS wristwatch 100.

The process whereby the baseband signal data 44 in FIG. 12 is processed to acquire the Z count and the time kept by the GPS wristwatch 100 is corrected based on the Z count is described next with reference to step ST9a to ST12a.

When operation of the baseband unit 21 stops in step ST8a, processing the baseband signal data 44 stored in the signal RAM 22a in FIG. 10 by the MPU 17 starts (step ST9a). More specifically, the signal processing program 36 in FIG. 11 executes.

Control then goes to step ST10a. When processing by the signal processing program 36 ends, the result is stored to the signal processing result 46 in FIG. 12 in step ST10a. The time count of the timer 29 when signal processing ends is also stored as the end-of-signal-processing time 47 in FIG. 12.

If in this example approximately 0.4 second passes from the end of GPS signal reception in step ST4a before signal processing until the baseband unit 21 finishes operating in step ST8a, and 3 seconds are required to execute steps ST9a and ST10a, the time counted by the timer 29 to this point is 10 seconds.

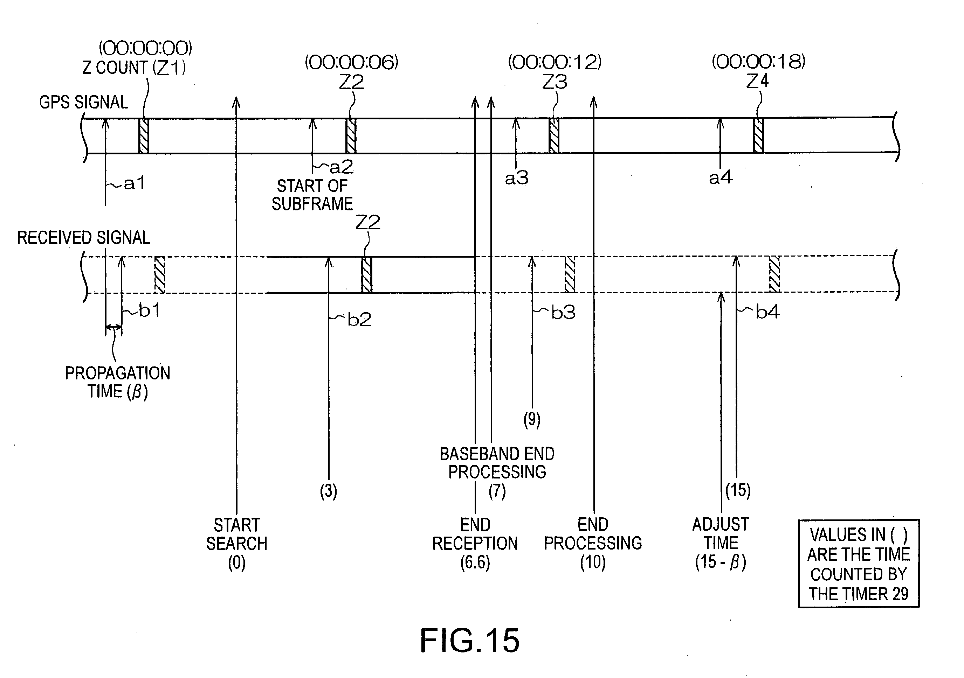

The signal processing result in this embodiment of the invention is described next referring to the GPS signal and reception signal timing chart in FIG. 15.

In FIG. 15 the GPS signal sent from the GPS satellite 15 is shown in the top row, and the reception signal that is received and processed by the GPS wristwatch 100 is shown in the bottom row.

As shown in FIG. 15, the reception signal is received delayed by a propagation time β from the transmitted GPS signal. This propagation time β represents the time required for the GPS signal to travel from the GPS satellite 15 to the GPS wristwatch 100. This propagation time β is an example of propagation delay time information.

The GPS wristwatch 100 can acquire this propagation time β by detecting the phase of the C/A code in step ST3a and processing the signal in step ST7a.

Arrows a1 to a4 in the GPS signal in FIG. 15 denote the start of each subframe in FIG. 8A. These timing points can be acquired by the GPS wristwatch 100 correlating and processing the C/A codes of the GPS signal.

The arrows b1 to b4 in the reception signal shown on the bottom row also denote the beginning of the subframes and correspond to arrows a1 to a4 in the GPS signal. Arrows b1 to b4 indicate the propagation delay β at which the subframes are received as described above.

The Z counts Z1 to Z4 in FIG. 15 are the TOW values shown in FIG. 8B, and these time values show the starting time of the next subframe. For example, Z1 in FIG. 15 is 00:00:00, and this time 00:00:00 is the time of the beginning of the subframe indicated by arrow a2 in FIG. 15.

Because the length of one subframe is 6 seconds, the Z counts in subframes a2 to a4 are sequentially incremented 6 seconds each.

The GPS wristwatch 100 can thus acquire the time of the Z count in these subframes by a simple calculation.

More specifically, by receiving and processing the GPS signal from the GPS satellite 15, the GPS wristwatch 100 acquires the propagation time β, the subframe start time a2 (b2 on the receiver side), and the time (Z count) of the beginning of the next subframe after the received subframe as shown in FIG. 15.

If reception proceeds as shown in FIG. 13 based on this assumption, operation proceeds as follows.

That is, the GPS wristwatch 100 starts receiving the GPS signal of the GPS satellite 15 at the start of reception indicated in FIG. 15. This corresponds to step ST1a in FIG. 13.

The timer 29 starts counting the time as described above, and reception starts at 0 second in this example. This time value is stored as the start-reception time 43a in FIG. 12.

Because GPS signal reception ends in step ST4a (operation of the RF unit 20 stops) at 6.6 seconds after the start of reception in this example, the timer 29 count when reception ends is 6.6 seconds.

If the operation of the baseband unit 21 in steps ST5a to ST8a takes 0.4 second, and steps ST9a and ST10a then take 3 seconds as described above, the time counted by the timer 29 at the end of processing (end-of-signal-processing time 47) is 10 seconds.

Furthermore, because the GPS wristwatch 100 can determine the timing of the beginning of the received subframe in FIG. 15 by a simple calculation, the GPS wristwatch 100 can determine how many seconds this is from the reception start time of the timer 29 in FIG. 15 by a simple calculation.

If this time is 3 seconds, for example, the start of the subframe indicated by arrow b2 in the reception signal in FIG. 15 is when the time counted by the timer 29 reaches 3 seconds.

As shown in FIG. 15, the time of the Z count (Z2) acquired from the received signal is the time count of the timer 29 at the point indicated by arrow b3, that is, 9 seconds.

Because this 9-second time count of the timer 29 includes the propagation time β, the time count of the timer 29 equal to this 9 seconds minus propagation time β is equal to the time of the Z count Z2.

The time equal to the time value of this Z count Z2 plus 6 seconds is therefore the time count of the timer 29 at arrow b4 (15 seconds) minus the propagation time β (which is equal to a4 in FIG. 15).

The time adjustment data calculation program 37 in FIG. 11 therefore operates in step ST11a to determine the calculated starting point (a4) of the next subframe in the GPS signal based on the processed GPS signal data and the time count of the timer 29, and store this value as the time adjustment timing 48 in FIG. 12.

At the time count of the timer 29 equal to (15 seconds minus the propagation time β), this time adjustment timing 48 is the time of the Z count Z2 (00:00:06) plus 6 seconds or 00:00:12.

The timing of the time adjustment can thus be acquired with good precision by adding the product of 6 seconds times the number of subframes passed by the end of signal processing to the Z count received by the GPS wristwatch 10, and then subtracting the propagation time β.

The time adjustment program 38 in FIG. 11 then operates in step ST12a as shown in FIG. 14 to correct the real-time clock 23 in FIG. 10 based on the time adjustment timing 48 in FIG. 12. The time can thus be corrected with good precision.

By separating receiving, demodulating, and processing the GPS signals from the GPS satellite 15, this embodiment of the invention can minimize the peak power consumption. The time can also be adjusted with good precision even though time is taken for signal processing after reception and demodulation end.

This embodiment of the invention uses the timer 29 to get the start-reception time 43a and end-of-signal-processing time 47. The timer 29 could, however, be used to count only the start-reception time 43a or the end-of-signal-processing time 47, and the other value could be calculated.

The invention can also correct the time kept by the real-time clock 23 with good precision irrespective of the time required to complete processing as shown in FIG. 15. An MPU 17 with low processing capacity can therefore be used to execute the operations shown in step ST9a in FIG. 14.

Power consumption by the MPU can therefore be reduced, and a GPS wristwatch with even lower power consumption can therefore be achieved.

* Embodiment 3

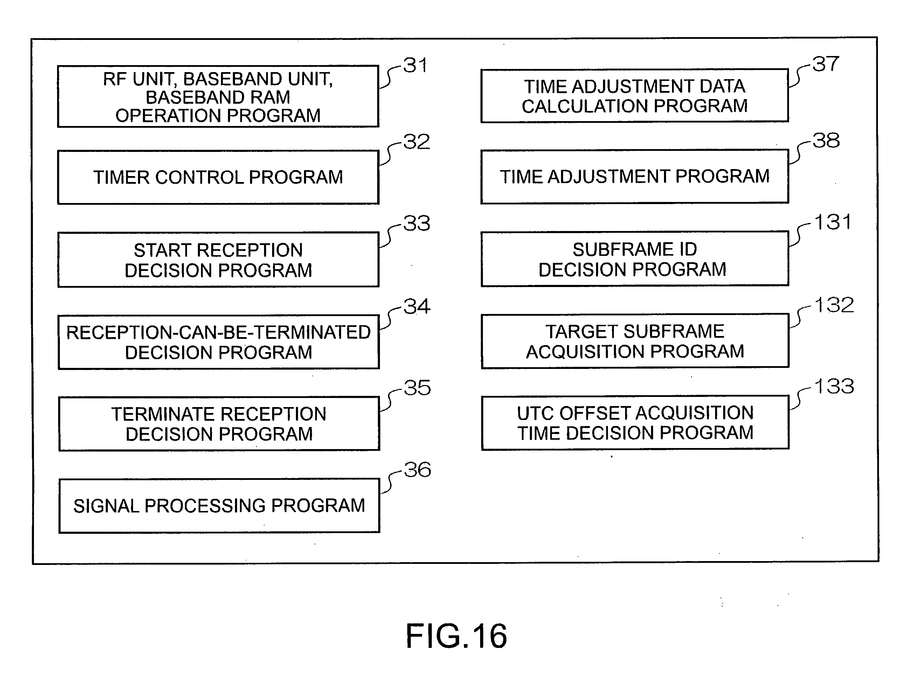

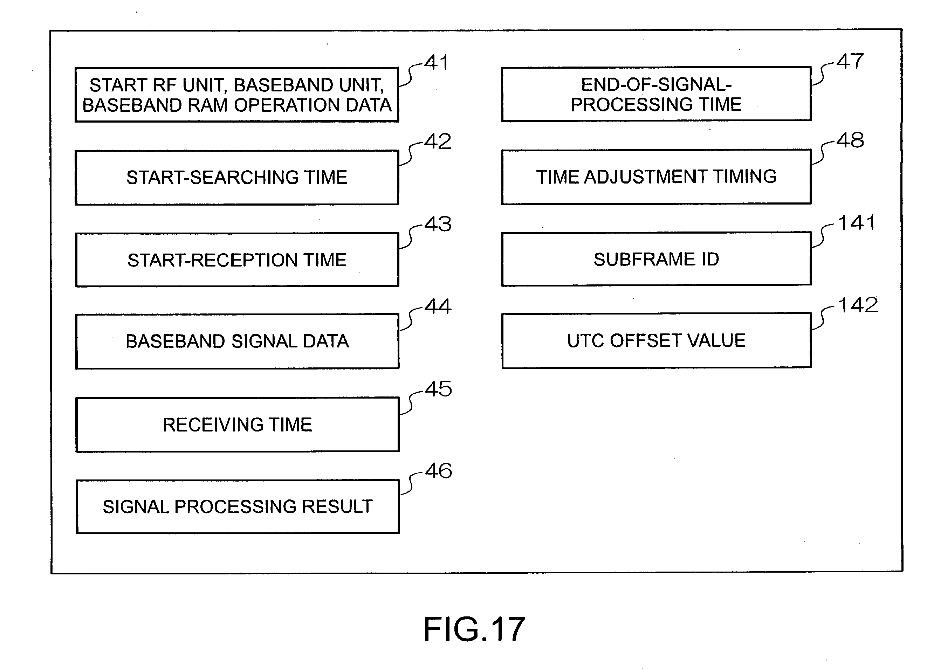

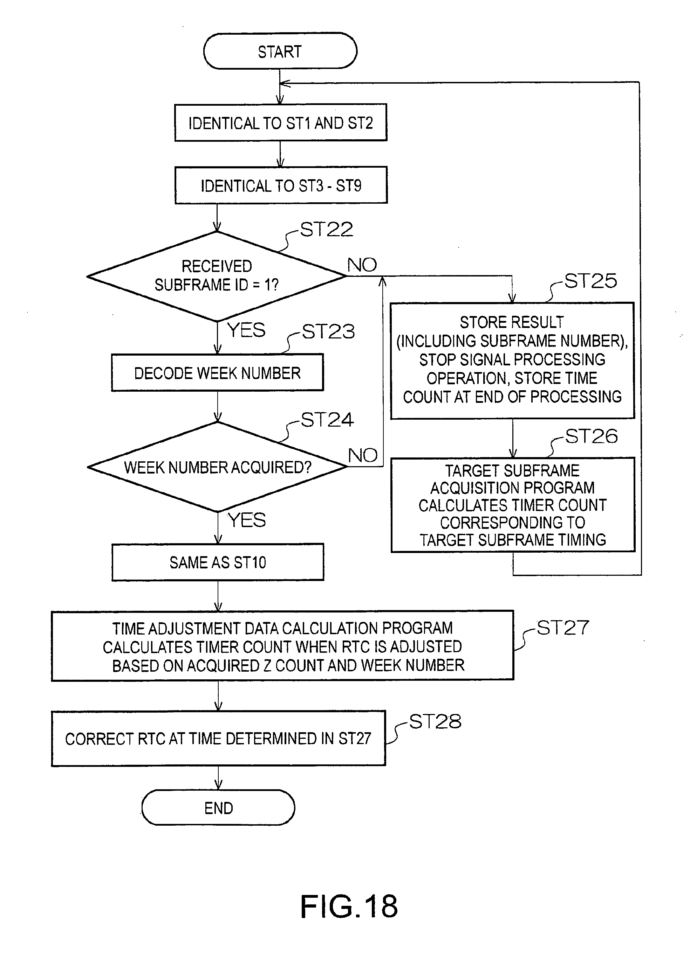

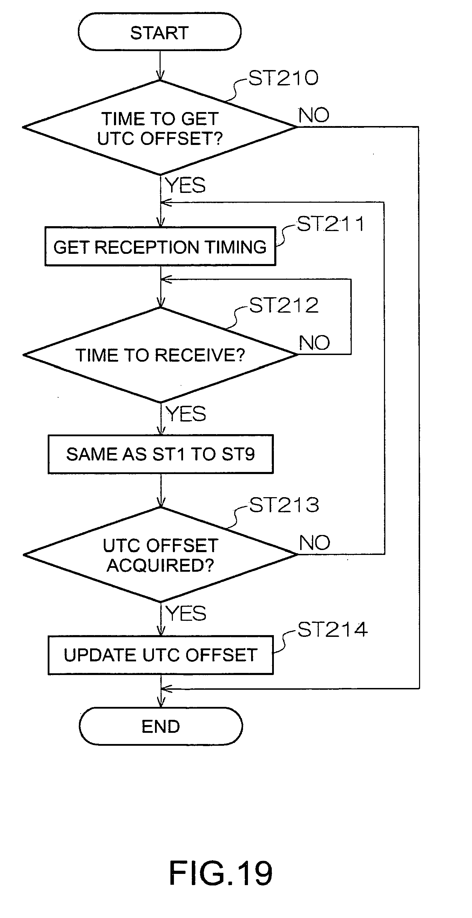

FIG. 16 and FIG. 17 are block diagrams schematically showing the configuration of a GPS wristwatch 200 (see FIG. 1) according to a third embodiment of the invention. FIG. 18 and FIG. 19 are flow charts describing the operation of the GPS wristwatch 200 according to this embodiment.

The GPS wristwatch 200 according to this embodiment of the invention shares many aspects in common with the GPS wristwatch 10 of the first embodiment and the GPS wristwatch 100 of the second embodiment. Such common parts are identified by the same reference numerals, and further description thereof is omitted below where primarily the differences between the embodiments are described. Note that while FIG. 16, FIG. 17, FIG. 18, and FIG. 19 are based on the GPS wristwatch 10 of the first embodiment, they can also be applied to the second embodiment.

This embodiment differs from the first and second embodiments in that the GPS wristwatch 200 gets the week number data and UTC parameter from the GPS signal of the GPS satellite 15.

As described above, the Z count acquired from the GPS signal is the number of seconds since 00:00:00 Sunday at the beginning of every week, and is reset to 00:00:00 at 00:00:00 Sunday night of the next week.

If time information longer than a week is needed, such as when the date is required for the time indicated by the Z count, information other than the Z count is needed.

This other information is the week number in this embodiment of the invention. The week number is a serial number starting with 0 being the number of the week of January 6, 1980. The week number value is contained in subframe 1 of the subframes shown in FIG. 8A. Note that subframes 1, 2, 3, 4 denote the subframes containing TLM (A), (B), (C), (D), respectively, in FIG. 8A.

Therefore, when the GPS wristwatch 200 adjusts the time including date data kept by the real-time clock 23 in FIG. 2, this week number value must also be acquired in addition to the Z count acquired in the first and second embodiments.

The date indicated by the week number is synchronized to an atomic clock operated by the United States Naval Observatory (USNO). There is, therefore, a slight deviation from the UTC (universal time, coordinated). The UTC parameter (UTC offset message) must therefore be received to correct for this deviation, and this value is contained on page 18 of subframe 4.

In order for the GPS wristwatch according to this embodiment of the invention to accurately determine the date and time, this UTC correction parameter (UTC offset message) must be acquired for correction.

Because the UTC denotes the universal time, Japan Standard Time can be acquired by adding 9 hours to UTC to get the time in Japan, for example.

This embodiment of the invention describes a method of acquiring the date and UTC correction value when adjusting the time. The process of acquiring the week number data used to determine the date is first described with reference to FIG. 18, and the process of acquiring the UTC correction data is described with reference to FIG. 19.

As shown in FIG. 18, this embodiment processes the GPS signal of the GPS satellite 15 in the same way as described in the first embodiment, but additionally acquires the subframe number (ID) from the received GPS signal (such as in step ST9).

Whether the received subframe number (ID) is 1 is then determined in step ST22. More specifically, the subframe ID evaluation program 131 in FIG. 16 operates to make this decision. If it is determined that the subframe number (ID) is 1, control goes to step ST23 and the week number is decoded.

Whether the week number was acquired is then determined in step ST24. If step ST22 decides that the received subframe is not 1, or if step ST24 decides that the week number was not acquired, control goes to step ST25.

In step ST25 the result is stored as the signal processing result 46 in FIG. 17 as described in the first embodiment. That is, the signal processing result in this case contains the propagation time β, the subframe start timing a2 (b2 on the receiver side), and the time of the beginning of the next subframe after the received subframe (the Z count) as shown in FIG. 9 and described in the first embodiment.

In addition, this embodiment of the invention stores the subframe number (ID) of the received subframe as the subframe ID 141 in FIG. 17.

The time count of the timer 29 when GPS signal processing ends is also stored in the signal processing result 46.

The target subframe acquisition program 132 in FIG. 16 then operates in step ST26 to calculate the time count of the timer 29 corresponding to the timing of the target subframe. For example, if the target subframe is subframe 1 and the received subframe is subframe 3, of the beginnings of the subframes denoted by arrows a1 and so forth in FIG. 9, the beginning of subframe 1 is calculated. If the received subframe is subframe 3, the received Z count is the time of the beginning of subframe 2. Therefore, if the propagation time β is corrected based on the time equal to this Z count plus 18 seconds, the time count of the timer 29 indicating the beginning of subframe 1 can be known.

The signal in subframe 1 can therefore be received and the week number value can be acquired by receiving the GPS signal timed to the beginning of subframe 1 based on the timer 29.

As a result, the time adjustment data calculation program 37 in FIG. 16 can adjust the real-time clock 23 based on the week number and not just the Z count. The date can therefore be accurately corrected.

The MPU 17 and the signal processing program 36 in FIG. 16 are an example of a subframe number acquisition unit. As shown in step ST26, this embodiment of the invention receives the target subframe of the satellite signal based on the target subframe number.

The process of acquiring the UTC offset message (UTC parameter) that is used to correct the deviation from the UTC is described next with reference to FIG. 19.

The UTC offset value is needed in addition to the week number to adjust the time. This value is stored in the UTC offset value 142 in FIG. 17.

The UTC offset value 142 must be updated regularly, such as several times a year, at a predetermined time. The process for updating this value is shown in FIG. 19.

Whether it is time to get the UTC offset value is determined in step ST210 in FIG. 19. More particularly, this is determined by the UTC offset acquisition time decision program 133 in FIG. 16.

If it is time to get the UTC offset value, the reception timing is calculated in step ST211.

More specifically, the target subframe acquisition program 132 in FIG. 16 runs to calculate the time difference between the received subframe and page 18 of subframe 4, which is the target subframe, as shown in step ST26 in FIG. 18.

Whether the time to receive the UTC offset has come is then decided in step ST212. If the reception time has come, the GPS signal is received, and if the UTC offset data is acquired in step ST213, the UTC offset value 142 in FIG. 17 is updated in step ST214.

By thus regularly updating the UTC offset value 142, the offset from the UTC can be corrected more precisely when adjusting the time of the GPS wristwatch 200.

* Embodiment 4

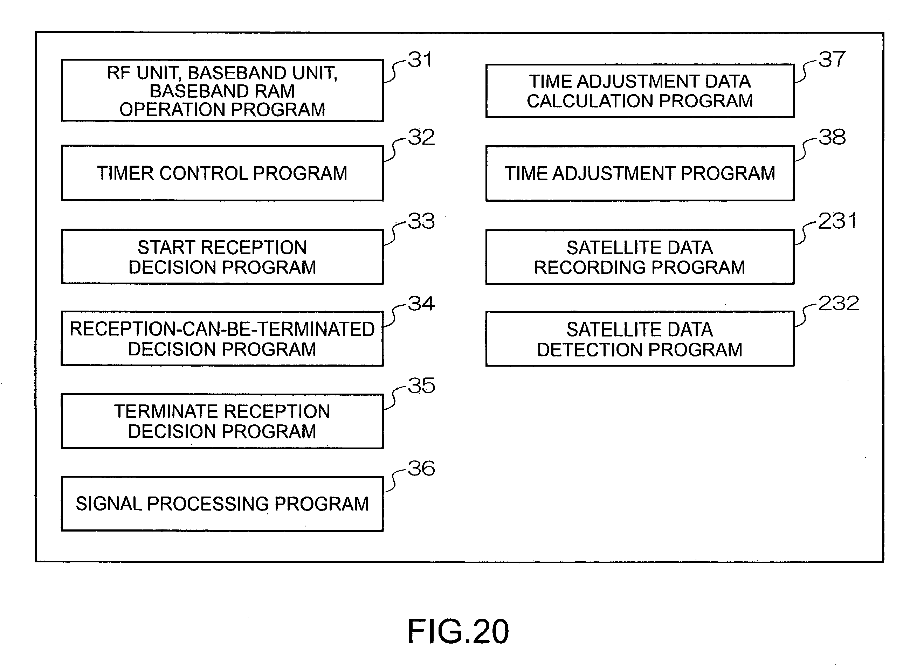

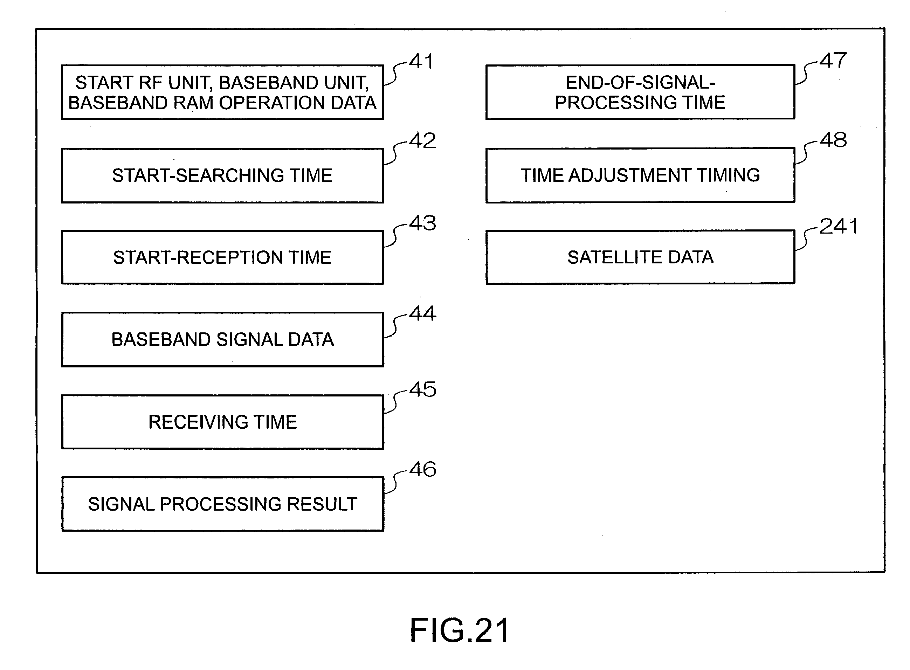

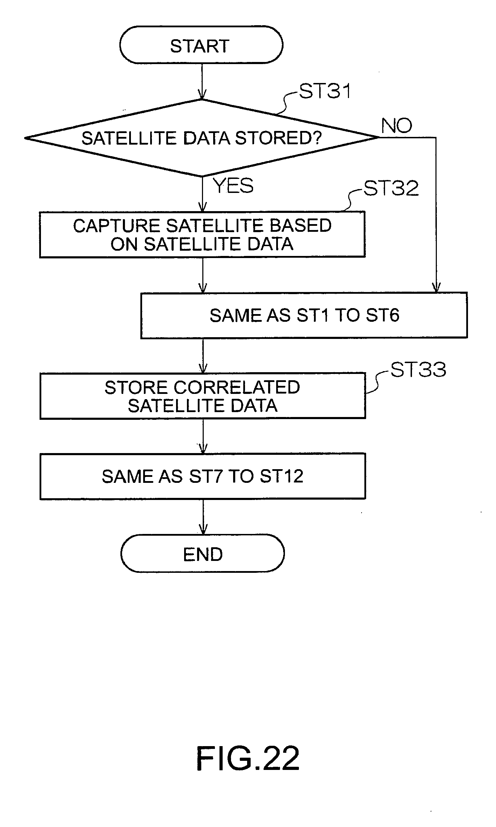

FIG. 20 and FIG. 21 are block diagrams schematically showing the configuration of a GPS wristwatch 300 (see FIG. 1) according to a fourth embodiment of the invention. FIG. 22 is a flow chart describing the operation of the GPS wristwatch 300 according to this embodiment.

The GPS wristwatch 300 according to this embodiment of the invention shares many aspects in common with the GPS wristwatch 10 of the first embodiment and the GPS wristwatch 100 of the second embodiment. Such common parts are identified by the same reference numerals, and further description thereof is omitted below where primarily the differences between the embodiments are described. Note that while FIG. 20, FIG. 21, and FIG. 22 are based on the GPS wristwatch 10 of the first embodiment, they can also be applied to the second embodiment.

The GPS wristwatch 300 according to this embodiment of the invention stores the GPS satellite 15 data that has been received and correlated, and uses this stored data as reference data the next time a GPS satellite 15 signal is captured.

More particularly, satellite data is produced based on the Doppler frequency, C/A code phase, and signal strength, for example, of the received GPS satellite 15 signal.

That is, the Doppler frequency deviation is measured. The closer this deviation is to 0, the closer the satellite is to being directly overhead, and the easier it is to receive the satellite signal. The GPS wristwatch 300 then stores the time when the GPS signal of the GPS satellite 15 was received together with this Doppler frequency shift. This enables knowing which GPS satellites 15 can be easily received at a particular time.

This satellite data is stored as the satellite data 241 in FIG. 21. More specifically, this satellite data 241 is stored in the general purpose RAM 18 in FIG. 2.

Because the satellite number of the particular GPS satellite 15 is known from the phase of the C/A code, the satellite number is also stored linked to this Doppler frequency deviation data. As a result, the satellite numbers of the GPS satellites 15 from which signals can be easily received can also be identified.

Signal strength data is also linked to the Doppler frequency deviation data and the satellite number data. This enables selecting a GPS satellite 15 from which signals can be received easily with even greater reliability.

More specifically, data linking the time, satellite number, Doppler frequency shift, and signal strength to each other is stored to the satellite data 241 in FIG. 21. This satellite data 241 is an example of a captured satellite information storage unit.

A method of collecting and using this satellite data 241 is described with reference to the flow chart in FIG. 22. The satellite data 241 is collected in step ST33.

More specifically, the satellite data recording program 231 in FIG. 20 operates to save the satellite data 241 as described above.

The satellite data 241 is then used in step ST31 and step ST32. More specifically, the satellite data detection program 232 runs in step ST31 to determine if usable satellite data 241 is available.

If step ST31 determines that usable satellite data 241 is present, the satellite data 241 is used in step ST32 to quickly capture a satellite.

More specifically, the satellite data 241 records the satellite numbers of the satellites that are closest to the zenith and have high signal strength at the current time. By using this data to search for a GPS satellite 15, the GPS satellite can be captured more quickly and power consumption can be reduced.

* Embodiment 5

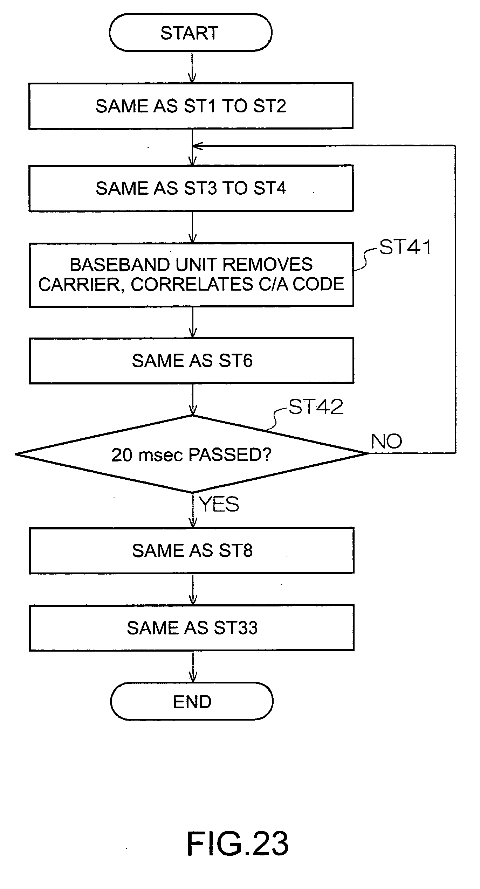

FIG. 23 is a flow chart describing the operation of a GPS wristwatch according to a fifth embodiment of the invention.

The GPS wristwatch according to this embodiment of the invention shares many aspects in common with the GPS wristwatch 300 of the fourth embodiment. Such common parts are identified by the same reference numerals, and further description thereof is omitted below where primarily the differences between the embodiments are described.

As shown in FIG. 23, the flow chart describing the operation of the GPS wristwatch according to this embodiment of the invention differs from the flow chart for the fourth embodiment shown in FIG. 22 in the addition of steps for acquiring only the satellite data 241 of the GPS satellite 15. More specifically, the flow chart in FIG. 23 does not acquire the Z count from the GPS signal, and instead regularly acquires only the satellite data 241.

As a result, the reception time for the GPS signal of the GPS satellite 15 is from the length of the C/A code (1 msec) to the length of one message bit (20 msec).

More specifically, the GPS signal of the GPS satellite 15 is received for only 20 msec, or the length of one message bit, in step ST42 in FIG. 23.

The object of the process shown in FIG. 23 is thus only to acquire the satellite data 241 of the fourth embodiment instead of the Z count in order to quickly locate a satellite in the future. This embodiment of the invention can thus quickly and effectively capture the satellite data 241.

* Embodiment 6

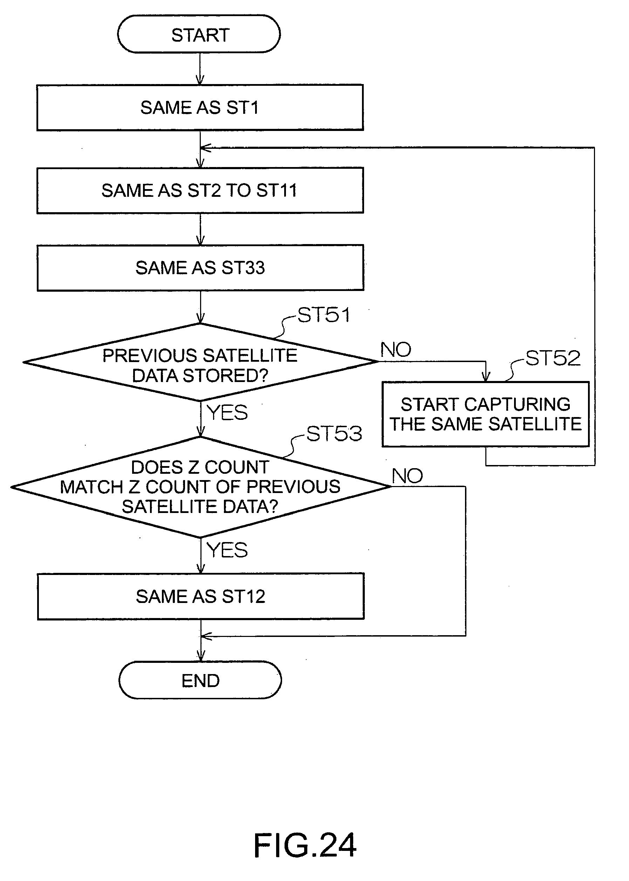

FIG. 24 is a flow chart describing the operation of a GPS wristwatch according to a sixth embodiment of the invention.

The GPS wristwatch according to this embodiment of the invention shares many aspects in common with the embodiments described above. Such common parts are identified by the same reference numerals, and further description thereof is omitted below where primarily the differences between the embodiments are described.

Unlike the embodiments described above, after receiving the GPS signal of a GPS satellite 15 and acquiring the Z count (time information), the GPS wristwatch according to this embodiment of the invention again receives the GPS signal from the same GPS satellite 15 and reacquires the Z count in order to ensure the accuracy of the Z count.

The two Z counts are then compared to detect a match therebetween. If the counts match, the real-time clock 23 is adjusted.

More specifically, whether the previous satellite data is available is determined in step ST51 in FIG. 24. If the previous satellite data is not available, the same GPS satellite 15 for which a correlation was just determined is captured again in step ST52 to receive the GPS signal and get the Z count.

A match detection program not shown then operates in step ST53 to detect if the counts match. This enables quickly detecting an error if the Z count acquired from the first received signal is wrong due to noise, for example. This greatly improves the precision of the time adjustment.

This match detection program is an example of a match detection unit.

* Embodiment 7

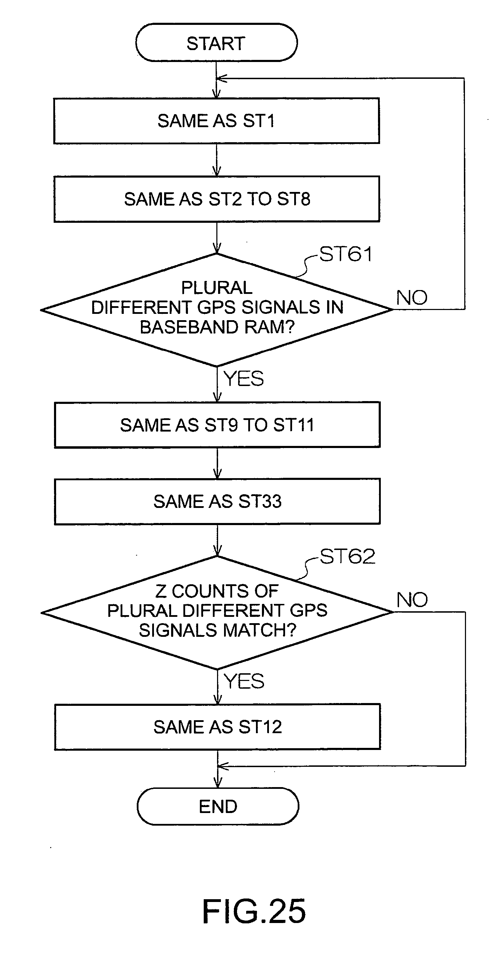

FIG. 25 is a flow chart describing the operation of a GPS wristwatch according to a seventh embodiment of the invention.

The GPS wristwatch according to this embodiment of the invention shares many aspects in common with the sixth embodiment described above. Such common parts are identified by the same reference numerals, and further description thereof is omitted below where primarily the differences between the embodiments are described.

This embodiment differs from the sixth embodiment in that the GPS wristwatch receives GPS signals from a plurality of different GPS satellites 15 and gets a plurality of Z counts (time information). To ensure the accuracy of the acquired plural Z counts, the Z counts are compared to detect if the values match. If a match is confirmed, the time of the real-time clock 23 is corrected.

More specifically, step ST61 in FIG. 25 detects if GPS signals from a plurality of different GPS satellites 15 are stored in baseband RAM 22. If they are, step ST62 determines if there is a match between the Z counts.

A different-satellite data match detection program not shown thus operates to detect a match between the Z counts. If a match is confirmed, the time of the real-time clock 23 is adjusted. This embodiment of the invention thus detects if the Z counts acquired from different GPS satellites 15 match. As a result, the time can be corrected using an even more accurate Z count.

This different-satellite data match detection program is an example of a different-satellite match detection unit.

The invention is not limited to the embodiments described above. The foregoing embodiments are described using GPS satellites that orbit the Earth as an example of a positioning information satellite. However, the positioning information satellite of the invention is not so limited, and includes geostationary satellites and quasi-zenith satellites, for example.

The invention being thus described, it will be obvious that it may be varied in many ways. Such variations are not to be regarded as a departure from the spirit and scope of the invention, and all such modifications as would be obvious to one skilled in the art are intended to be included within the scope of the following claims.

## Claims

1. A time adjustment device comprising:
a reception unit that receives satellite signals transmitted from a positioning information satellite;
a satellite signal processing unit that processes the satellite signal received by the reception unit and acquires at least satellite time information;
a timekeeping unit that keeps time internally; and
a time information adjustment unit that adjusts the internal time based on the satellite time information;
wherein the reception unit and the satellite signal processing unit operate alternatively.

2. The time adjustment device described in claim 1, wherein:
the reception unit comprises a frequency processing unit that frequency converts the received satellite signal; and
a demodulation unit that demodulates the satellite signal after frequency conversion by the frequency processing unit; and
the frequency processing unit, the demodulation unit, and the satellite signal processing unit operate alternatively.

3. The time adjustment device described in claim 1 or claim 2, further comprising:
a satellite signal storage unit that stores the satellite signal received by the reception unit.

4. The time adjustment device according to any one of claims 1 to 3, further comprising:
a counter unit that acquires reception unit operating time information, which is operation-related time for the reception unit, and/or satellite signal processing time information, which is operation-related time for the satellite signal processing unit;
wherein the time information adjustment unit adjusts the internally kept time based on adjustment timing information, which is calculated from the reception unit operating time information and/or satellite signal processing time information.

5. The time adjustment device according to any one of claims 1 to 4, wherein:
the satellite signal contains propagation delay time information, which is the time required for the satellite signal of the positioning information satellite to arrive.

6. The time adjustment device described in claim 4 or 5, wherein:
the reception unit operating time information contains satellite signal reception time information, which is the time that the reception unit receives the satellite signal of the positioning information satellite; and
the satellite signal reception time information is the shortest time required to acquire the satellite time information and adjustment timing information.

7. The time adjustment device according to any one of claims 4 to 6, wherein:
the counter unit operates based on a high precision oscillator.

8. The time adjustment device according to any one of claims 1 to 7, wherein:
the satellite signal contains subframe number information;
the time adjustment device further comprises a subframe number acquisition unit that acquires target subframe number information including the week number value of the GPS time and/or UTC (universal time, coordinated) parameter information from the subframe number information; and
the target subframe of the satellite signal is acquired based on the target subframe number information.

9. The time adjustment device according to any one of claims 1 to 8, wherein:
the satellite signal contains satellite number information, Doppler frequency information, and C/A code phase information for the positioning information satellite; and
the time adjustment device further comprises a captured satellite information storage unit that stores the received satellite number information, Doppler frequency information, and C/A code phase information for the positioning information satellite.

10. The time adjustment device according to any one of claims 6 to 8, wherein:
the satellite signal reception time is from the length of the C/A code to the length of one message bit.

11. The time adjustment device according to any one of claims 1 to 10, wherein:
the satellite signal is received a plurality of times from the same positioning information satellite; and
the time adjustment device further comprises a match detection unit that determines if there is a match between the plural satellite time values acquired from the plural received signals.

12. The time adjustment device according to any one of claims 1 to 10 , wherein:
the satellite signals are acquired from a plurality of positioning information satellites; and
the time adjustment device further comprises a different-satellite match detection unit that determines if there is a match between the plural time values acquired from the plural positioning information satellites.

13. A timepiece with a time adjustment device, comprising:
a reception unit that receives satellite signals transmitted from a positioning information satellite;
a satellite signal processing unit that processes the satellite signal received by the reception unit and acquires at least satellite time information;
a timekeeping unit that keeps time internally; and
a time information adjustment unit that adjusts the internal time based on the satellite time information;
wherein the reception unit and the satellite signal processing unit operate alternatively.

14. A time adjustment method comprising:
a reception unit that receives satellite signals transmitted from a positioning information satellite;
a satellite signal processing unit that processes the satellite signal received by the reception unit and acquires at least satellite time information;
a timekeeping unit that keeps time internally; and
a time information adjustment unit that adjusts the internal time based on the satellite time information;
wherein the reception unit and the satellite signal processing unit operate alternatively; and
the satellite signal processing unit operates on the satellite signal after the satellite signal is received by the reception unit.
